(19) **Europäisches Patentamt / European Patent Office / Office européen des brevets**

(11) **EP 1 068 565 B1**

(12) **EUROPEAN PATENT SPECIFICATION**

(45) Date of publication and mention of the grant of the patent:
**30.09.2009 Bulletin 2009/40**

(51) Int Cl.:
**G06F 1/00** *(2006.01)* **G06F 7/72** *(2006.01)*
**H03B 29/00** *(2006.01)* **G06F 13/12** *(2006.01)*
**G06F 21/00** *(2006.01)*

(21) Application number: **00900113.2**

(22) Date of filing: **07.01.2000**

(86) International application number:
**PCT/IL2000/000015**

(87) International publication number:
**WO 2000/042484 (20.07.2000 Gazette 2000/29)**

(54) **ACCELERATION AND SECURITY ENHANCEMENTS FOR ELLIPTIC CURVE AND RSA COPROCESSORS**

BESCHLEUNIGUNG UND SICHERHEITSVERBESSERUNG FÜR KOPROZESSOREN ZUR BERECHNUNG EINER ELLIPTISCHEN KURVE UND EINER RSA-FUNKTION

AMELIORATIONS APPORTEES EN TERMES D'ACCELERATION ET DE SECURITE A DES COPROCESSEURS RSA ET A COURBE ELLIPTIQUE

(84) Designated Contracting States:
**BE CH DE FR GB LI**

(30) Priority: **11.01.1999 IL 12800799**

(43) Date of publication of application:
**17.01.2001 Bulletin 2001/03**

(73) Proprietor: **SanDisk IL Ltd**
**Kfar Saba 44425 (IL)**

(72) Inventors:
• **GRESSEL, Carmi, David**
**85530 Mobile Post Negev (IL)**
• **HADAD, Isaac**
**84434 Beersheva (IL)**
• **DROR, Itai**
**84495 Omer (IL)**
• **MOLCHANOV, Alexey**
**84210 Beersheva (IL)**
• **MOSTOVOY, Michael**
**84480 Beersheva (IL)**

(74) Representative: **Brandon, Paul Laurence et al**
**APPLEYARD LEES**
**15 Clare Road**
**Halifax HX1 2HY (GB)**

(56) References cited:
WO-A-96/25813    WO-A-97/33217
WO-A-98/50851    DE-A1- 4 108 095
GB-A- 1 308 772    GB-A- 2 275 654
US-A- 4 295 041    US-A- 4 470 022
US-A- 4 646 032    US-A- 4 665 482
US-A- 4 813 024    US-A- 4 912 636
US-A- 4 932 053    US-A- 5 086 467
US-A- 5 315 257    US-A- 5 321 752
US-A- 5 448 639    US-A- 5 500 601
US-A- 5 664 017    US-A- 5 835 788
US-A- 5 949 160

• KOCHER P ET AL: "INTRODUCTION TO DIFFERENTIAL POWER ANALYSIS AND RELATED ATTACKS" PROCEEDINGS OF THE SYMPOSIUM ON THE STATE AND PROGRESS OF RESEARCH IN CRYPTOGRAPHY, 1998, pages 1-7, XP002930293
• "NOTES ON POWER SUPPLY DECOUPLING" RF DESIGN, PRIMEDIA BUSINESS MAGAZINES & MEDIA, OVERLAND PARK, KS, US, vol. 16, no. 11, October 1993 (1993-10), pages 85-86, XP000404285 ISSN: 0163-321X
• NG H-T ET AL: "CMOS CURRENT STEERING LGOIC FOR LOW-VOLTAGE MIXED-SIGNAL INTEGRATEDCIRCUITS" IEEE TRANSACTIONS ON VERY LARGE SCALE INTEGRATION (VLSI) SYSTEMS, IEEE SERVICE CENTER, PISCATAWAY, NJ, US, vol. 5, no. 3, September 1997 (1997-09), pages 301-308, XP000701407 ISSN: 1063-8210

- **HOLLMANN H D L ET AL: "Protection of software algorithms executed on secure modules" FUTURE GENERATIONS COMPUTER SYSTEMS, ELSEVIER SCIENCE PUBLISHERS. AMSTERDAM, NL, vol. 13, no. 1, July 1997 (1997-07), pages 55-63, XP004081709 ISSN: 0167-739X**
- **DEHM ET AL: "A practical implementation of the timing attack" UCL CRYPTO GROUP TECHNICAL REPORT CG-1998/1, 15 June 1998 (1998-06-15), pages 1-18, XP002367731 Université catholique de Louvain Retrieved from the Internet: URL:http://citeseer.ist.psu.edu/cache/pape rs/cs/ 2622/http:zSzzSzwww.dice.ucl.ac.bezS zcryptozSztech_reportszSzCG1998_1.pdf/dhem 98practical.pdf> [retrieved on 2006-02-15]**
- **WIN DE E ET AL: "ON THE PERFORMANCE OF SIGNATURE SCHEMES BASED ON ELLIPTIC CURVES" ALGORITHMIC NUMBER THEORY, INTERNATIONAL SYMPOSIUM, 21 June 1998 (1998-06-21), pages 252-266, XP001111447**
- **GORDON D M: "A SURVEY OF FAST EXPONENTIATION METHODS" JOURNAL OF ALGORITHMS, ACADEMIC PRESS INC., ORLANDO, FL, US, vol. 27, no. 1, April 1998 (1998-04), pages 129-146, XP000986921 ISSN: 0196-6774**

**Description**

FIELD OF THE INVENTION

The present invention relates to apparatus operative to accelerate and secure computer peripherals, especially coprocessors used for cryptographic computations.

BACKGROUND OF THE INVENTION

US-A-4,813,024 discloses a fraud-preventive device for a memory card comprising an EPROM type or similar non-volatile memory designed to receive confidential authorization data as well as the results, wrong or otherwise, of tests on the authorization data, including a single simulation cell designed to record the non-erroneous results, this cell consuming the same current as a memory cell, which has never been programmed, of the memory part designed to record the wrong data.

SUMMARY

According to the present invention, there is provided a method on a cryptocomputer performing at least one of modular exponentiation and elliptic curve point addition and point doubling, for at least partially preventing leakage of secret information as a result of a probing operation, said cryptocomputer including a first shift register including a first output line to a second shift register and a second output line to a compensating register, the method comprising: causing, during a data transfer from said first shift register to said second shift register, a number of changes of status from one to zero equal to the number of changes of status from zero to one by causing a binary change of value on said second output line at each clock cycle of the data transfer that the binary value on said first output line does not change.

Further features of the present invention are set out in the appended claims.

The present invention also relates to a compact microelectronic specialized arithmetic logic unit, for performing modular and normal (natural, non-negative field of integers) multiplication, division, addition, subtraction and exponentiation over very large integers. When referring to modular multiplication and squaring using Montgomery methods, reference is made to the specific parts of the device as a modular arithmetic coprocessor, MAP, also as relates to enhancements existing in the applicant's U.S. Patent pending 09/050,958 filed March 31, 1998.

Preferred embodiments of the invention described herein provide a modular computational operator for public key cryptographic applications on portable Smart Cards, typically identical in shape and size to the popular magnetic stripe credit and bank cards. Similar Smart Cards (as per technology of US Patent 5,513,133 and 5,742,530) are being used in the new generation of public key cryptographic devices for controlling access to computers, databases, and critical installations; to regulate and secure data flow in commercial, military and domestic transactions; to decrypt scrambled pay television programs, etc. Typically, these devices are also incorporated in computer and fax terminals, door locks, vending machines, etc.

The preferred architecture is of an apparatus operative to be integrated to a multiplicity of microcontroller designs while the apparatus operates in parallel with the controller. This is especially useful for long procedures that swap or feed a multiplicity of operands to and from the data feeding mechanism, allowing for modular arithmetic computations of any conventional length.

This embodiment preferably uses only one multiplying device which inherently serves the function of two multiplying devices, basically similar to the architecture described in applicant's 5,513,133 and further enhanced in U.S. Patent application 09/050,958 and PCT application PCT/IL98/0048. Using present conventional microelectronic technologies, the apparatus of the present invention may be integrated with a microcontroller with memories onto a 4 by 4.5 by 0.2 mm microelectronic circuit.

Preferred embodiments of the present invention also seek to provide an architecture for a digital device which is a peripheral to a conventional digital processor, with computational, logical and architectural novel features relative to the processes described in US Patent 5,513,133.

A concurrent process and a unique hardware architecture are provided, to perform modular exponentiation without division preferably with the same number of operations as are typically performed with a classic multiplication/division device, wherein a classic device typically performs both a multiplication and a division on each operation. A particular feature of a preferred embodiment of the present invention is the concurrency of operations performed by the device to allow for unlimited operand lengths, with uninterrupted efficient use of resources, allowing for the basic large operand integer arithmetic functions.

The advantages realized by a preferred embodiment of this invention result from a synchronized sequence of serial processes. These processes are merged to simultaneously (in parallel) achieve three multiplication operations on n bit operands, using one multiplexed k bit serial/parallel multiplier in (n + k) effective clock cycles. This procedure accomplishes the equivalent of three multiplication computations, as described by Montgomery.

By synchronizing loading of operands into the MAP and on the fly detecting values of operands, and on the fly preloading and simultaneous addition of next to be used operands, the apparatus is operative to execute computations in a deterministic fashion. All multiplications and exponentiations are executed in a predetermined number of clock cycles. Additional circuitry is preferably added which on the fly preloads, three first k bit variables for a next iteration Montgomery squaring sequence. A detection device is preferably provided where only two of the three operands are chosen as next iteration multiplicands, eliminating k effective clock cycle wait states. Conditional branches are replaced with local detection and compensation devices, thereby providing a basis for a simple control mechanism, which, when refined, typically include a series of self-exciting cascaded counters. The basic operations herein described are typically executed in deterministic time using a device described in US Patent 5,513,133 to Gressel et al or devices as manufactured by Motorola in East Kilbride, Scotland under the trade name MSC501, and by STMicroelectronics in Rousset, France, under the trade name ST16-CF54.

The apparatus of preferred embodiments of the present invention has particularly lean demands on external volatile memory for most operations, as operands are loaded into and stored in the device for the total length of the operation. The apparatus preferably exploits the CPU onto which it is appended, to execute simple loads and unloads, and sequencing of commands to the apparatus, whilst the MAP performs its large number computations. Large numbers presently being implemented on smart card applications range from 128 bit to 2048 bit natural applications. The exponentiation processing time is virtually independent of the CPU which controls it. In practice, architectural changes are typically unnecessary when appending the apparatus to any CPU. The hardware device is self-contained, and is preferably appended to any CPU bus.

In general, the present invention also relates to arithmetic processing of large integers. These large numbers are typically in the natural field of (non-negative) integers or in the Galois field of prime numbers, GF(p), and also of composite prime moduli. More specifically, a preferred embodiment of the present invention seeks to provide a device that can implement modular exponentiation of large numbers. Such a device is suitable for performing the operations of Public Key Cryptographic authentication and encryption protocols, which work over increasingly large operands and which cannot be executed efficiently with present generation modular arithmetic coprocessors, and cannot be executed securely in software implementations. The methods described herein are useful for the most popular modular exponentiation computation methods, where sequences of square and multiply have been made identical in the steps executed. Both operations are enacted simultaneously, where the unused result is switched to an unused data register segment. Mock squaring operations, often called dummy squaring operations, are performed preferably using a result of a previous square which precedes a multiplication operation, as the next multiplicand operand. If a square result is not reused, the sequence is more difficult to detect. The terms, "mock" or "dummy" are used to describe an operation in particular which acts in many ways like another operation, and in particular leaving temporary unused [trashed] results. Usually the intent is to dissuade an adversary from attempting to probe a given device. Further, the present invention seeks to modify aspects of loading and unloading operands, and the computations thereof, in order to both accelerate the system response, and to secure computations against potential attacks on public key cryptographic systems.

A preferred embodiment of the present invention seeks to provide a hardware implementation of large operand integer arithmetic. Especially as concerns the numerical manipulations in a derivative of a procedure known as the interleaved Montgomery multiprecision modular multiplication (MM) method as described herein. MM is often used in encryption software oriented systems. The preferred embodiment is of particular value in basic arithmetic operations on long operand integers; in particular, A*B+C*D+S, wherein there is no theoretical limit on the sizes of A, B, C, D, or S. In addition, a preferred embodiment of the present invention is especially attuned to perform modular multiplication and exponentiation and to perform elliptic curve scalar point multiplications over the GF(p) field.

For modular multiplication in the prime and composite field of odd numbers, A and B are defined as the multiplicand and the multiplier, respectively, and N is defined as the modulus in modular arithmetic. N, is typically larger than A or B. N also denotes the register where the value of the modulus is stored. N, is, in some instances, typically smaller than A. A, B, and N are defined as $m \cdot k = n$ bit long operands. Each k bit group is called a character, the size of the group defined by the size (number of cells) of the multiplying device.

Then A, B, and N are each m characters long. For ease in following the step by step procedural explanations, assume that A, B, and N are 512 bits long, (n = 512); assume that k is 128 bits long because of the present cost effective length of such a multiplier, and data manipulation speeds of simple CPUs. Accordingly, m = 8 is the number of characters in an operand and also the number of iterations in a squaring or multiplying loop with a 1024 bit operand. All operands are positive integers. More generally, A, B, N, n, k and m may assume any suitable values.

In non-modular functions, the N and S registers can preferably be used for temporary storage of other arithmetic operands.

The symbol, $\equiv$, or in some instances =, is used to denote congruence of modular numbers, for example $16 \equiv 2$ mod 7. 16 is termed "congruent" to 2 modulo 7 as 2 is the remainder when 16 is divided by 7. When Y mod N $\equiv$ X mod N; both Y and X may be larger than N; however, for positive X and Y, the remainders are identical. Note also that the congruence of a negative integer Y, is Y + u N, where N is the modulus, and if the congruence of Y is to be less than N, u is the smallest integer which gives a positive result.

The Yen symbol, ¥, is used to denote congruence in a more limited sense. During the processes described herein, a value is often either the desired value, or equal to the desired value plus the modulus. For example X ¥ 2 mod 7. X can be equal to 2 or 9. X is defined to have limited congruence to 2 mod 7. When the Yen symbol is used as a superscript, as in $B^{\yen}$, then $0 \leq B^{\yen} < 2N$, or stated differently, $B^{\yen}$ is either equal to the smallest positive B which is congruent to $B^{\yen}$, or is equal to the smallest positive congruent B plus N, the modulus.

When X = A mod N, X is defined as the remainder of A divided by N; e.g., 3 = 45 mod 7.

In number theory, the modular multiplicative inverse of X is written as $X^{-1}$, which is defined by $X\, X^{-1}$ mod N = 1. If X = 3, and N = 13, then $X^{-1} = 9$, i.e., the remainder of 3.9 divided by 13 is 1.

The acronyms MS and LS are used to signify "most significant" and "least significant", respectively, when referencing bits, characters, and full operand values, as is conventional in digital nomenclature.

Characters in this document are words which are k bits long. Characters are denoted by indexed capitals, wherein the LS character is indexed with a zero, e.g., $N_0$ is the least significant character of N, and the MS character is typically indexed, n-1, e.g., $N_{n-1}$ is the most significant character of N.

Throughout this specification N designates both the value N, and the name of the shift register which stores N. An asterisk superscript on a value, denotes that the value, as stands, is potentially incomplete or subject to change. A is the value of the number which is to be exponentiated, and n is the bit length of the N operand. After initialization when A is "Montgomery normalized" to A* (A*=$2^n$A - to be explained later) A* and N are typically constant values throughout the intermediate step in the exponentiation. During the first iteration, after initialization of an exponentiation, B is equal to A*. B is also the name of the register wherein the accumulated value that finally equals the desired result of exponentiation resides. S or S* designates a temporary value, and S also designates the register or registers in which all but the single MS bit of S is stored. (S* concatenated with this MS bit is identical to S.) S(i-1) denotes the value of S at the outset of the i'th iteration; So denotes the LS character of an S(i) 'th value.

Montgomery multiplication, MM, is actually $(X \cdot Y \cdot 2^{-n})$ mod N, where n is typically the length of the modulus. This is written, P(A·B)N, and denotes MM or multiplication in the P field. In the context of Montgomery mathematics, we refer to multiplication and squaring in the P field as multiplication and squaring operations.

The apparatus of the present invention preferably performs all of the functions described in US Patent 5,513,133, and in US Patent application 09/050,958, [same as PCT/IL98/00148]. with the same order of electronic gates, in less than half the number of machine clock cycles, in the first instance, and an additional savings in clock cycles in the second instance. Reduction in performance clock cycles is advantageous on short operand computations, e.g., for use in elliptic curve cryptosystems. This is mostly because there is only one double action serial/parallel multiplier instead of two half size multipliers using the same carry save accumulator (CSA, 410) mechanism. Another explanation is that many of the intrinsic hardware delays have been eliminated, and a CPU loading/unloading hardware method has been developed to greatly shorten memory to peripheral and peripheral to memory data transfers. Furthermore, an "on the fly" preload operation has preferably replaced a time consuming preload operation for the first iteration of a squaring operation, and also replaces a complementary mock preload on a multiplication operation. In addition sequences and methods have been developed which simultaneously accelerate computations and prevent external analysis of secret operations, e.g., determining the secret exponent used in RSA signatures, or determining the secret random number used in the NIST Digital Signature Standard or in Elliptic Curve Signatures.

Much attention is addressed to dissuading adversaries from non-invasively monitoring the current dissipated in the cryptocomputer. Signal in the sense of taking such measurements is that current which is dissipated in sequences, and is used in statistical tests to determine secret values used in a computation. Pseudo-signal is in this sense, current which is dissipated, in a random or pseudo-random fashion to compensate for, and add to signal, thereby helping to deceive and adversary. Added noise is randomly generated noise, which is typically not synchronized to variations in signal. Noise in this sense is that part of the detected data, which in any way interferes with the detection of signal. Energy decoupling refers to the process of arbitrarily causing energy to be drawn from the power supply that the adversary can measure, and forceably inserted into the circuit, irrespective of the energy dissipated in signal and pseudo-signal. The excess of this energy is preferably dissipated over the entire surface of the monolithic cryptocomputer.

A pseudo signal is defined as an intentionally superfluously generated noise that in many or all respects mocks a valid signal using similar or identical resources and synchronized to the system clocks. Pseudo-signals, which are effectively noise, can be generated simultaneously with a valid signal, or alone in a sequence.

Montgomery Modular Multiplication A classical modular multiplication procedure consists of both a multiplication and a division process, e.g., A·B mod N where the result is the remainder of the product A·B divided by N. Implementing a conventional division of large operands is more difficult to perform than serial/parallel multiplications.

Using Montgomery's modular reduction method, division is typically replaced by multiplications using two precomputed constants. In the procedure demonstrated herein, there is only one precomputed constant, which is a function of the modulus. This constant is, or can be, computed using this specialized arithmetic Operational Unit device.

A simplified presentation of the Montgomery process, as is used in this device is now provided, followed by a complete preferred description.

If the number is odd (an LS bit one), e.g., 1010001 ($=81_{10}$) the odd number is typically transformed to an even number (a single LS bit of zero) by adding to it another fixing, compensating odd number, e.g., 1111 ($=15_{10}$); as 1111 + 1010001 = 1100000 ($96_{10}$). In this particular case, a number is produced five with LS zeros, because we know in advance the whole string, 81, and easily determine a binary number which we when added to 81, and produces a new binary number that has at least k LS zeros. The added in number is odd. Adding in an even number has no effect on the progressive LS bits of a result.

This is a clocked serial/parallel carry save process, where it is desired to have a continuous number of LS zeros. Thus at each clock cycle only the next bit emitting from the CSA, 410, may need a change of polarity. At each clock it is sufficient to add the fix, if the next bit is potentially a one or not to add the fix if the potential bit were to be a zero. However, in order not to cause interbit overflows (double carries), this fix is preferably summated previously with the multiplicand, to be added into the accumulator when the relevant multiplier bit is one, whenever the $Y_0$ Sense, 430, detects a one.

Only the remainder of a value divided by the modulus is of interest. To maintain congruency it is sufficient to add the modulus any number of times to a value, and still have a value that has same remainder. This means typically that $Y_0 \cdot N = \Sigma y_i 2^i N$ added to any integer typically produces a result with the same remainder. $Y_0$ is typically the number of times we add the modulus, N, to the summation to produce the necessary LS zeros. As described, the modulus that is added to the value is odd.

Montgomery interleaved variations typically reduce the limited working register storage used for operands. This is especially useful when performing public key cryptographic functions where typically one large integer, e.g., n=1024 bit, is multiplied by another large integer; a process that conventionally produces a double length 2048 bit integer.

Typically a sufficient number of Ns (the moduli) are add in to $A \cdot B = X$ or $A \cdot B + S = X$ during the process of multiplications (or squaring) so that the result is a number, Z, that has n LS zeros, and, at most, n+1 MS bits.

The LS n bits may be disregarded, typically, while performing P field computations, if at each stage, the result is realized to be the natural field modular arithmetic result, divided by $2^n$.

When the LS n bits are disregarded, and only the most significant n (or n+1) bits are used, then effectively, the result has been multiplied by $2^{-n}$, the modular inverse of $2^n$. If subsequently this result is re-multiplied by $2^n$ mod N (or $2^n$) a value is typically obtained which is congruent to the desired result (having the same remainder) as A*B+S mod N.

Example:

$$A*B+S \bmod N = (12*11+10) \bmod 13 = (1100*1011+1010)_2 \bmod 1011_2.$$

$2^i$ N is added in whenever a fix is necessary on one of the n LS bits.

```
    B      1011
  × A      1100
```

```
add S       1010

add A(0)*B   0000

        ---- sum of LS bit = 0 not add N

add 2^0 (N*0)  0000

sum       0101   →0 LS bit leaves CSA, 410

add A(1)*B  0000

        ----     sum of LS bit = 0 - add N

add 2^1(N*1)  1101

sum       1001   →0 LS bit leaves CSA

add A(2)*B   1011

        ----       sum LS bit = 0 don't add N

add 2^2(N*0)   0000

sum       1010     →0 LS bit leaves CSA

add A(3)*B   1011

        ----       sum LS bit = 1 add N

add 2^3(N*1)   1101

sum       10001    →0 LS bit leaves CSA
```

And the result is $10001\ 0000_2$ mod $13 = 17*2^4$ mod 13.

As 17 is larger than 13, 13 is subtracted, and the result is:

$$17 * 2^4 \equiv 4*2^4 \text{ mod } 13.$$

formally $2^{-n}(AB+S)$ mod $N = 9\ (12*11+10)$ mod $13 \equiv 4$

In Montgomery arithmetic only the MS non-zero result is utilized, and in the P field, it is typically assumed that the real result is divided by $2^n$; n zeros having been forced onto the MM.

In the example, $(8+2)* 13=10*13$ was added in, which effectively multiplied the result by $2^4$ mod $13 \equiv 3$. In effect, with the superfluous zeros the result is, A*B+Y*N+S - (12* 11+10* 13+10) in one process. This process, on much longer numbers, is executable on a preferred embodiment.

$$\text{Check- } (12*11+10) \text{ mod } 13 = 12;\ 4 * 3 = 12.$$

To retrieve an MM result back into a desired result using the same multiplication method, the previous result is Montgomery Multiplied $2^{2n}$ mod N, the term which is defined as H, as each MM leaves a parasitic factor of $2^{-n}$.

The Montgomery Multiply function P(A·B)N performs a multiplication modulo N of the A·B product into the P field. (In the above example, where we derived 4). The retrieval from the P field back into the normal modular field is performed by enacting the operator P on the result of P(A·B)N using the precomputed constant H. Now, if P ≡ P(A·B)N, it follows that P(P·H)N ≡ A·B mod N; thereby performing a normal modular multiplication in tow P field multiplications.

Montgomery modular reduction averts a series of multiplication and division operations on operands that are n and 2n bits long, by performing a series of multiplications, additions, and subtractions on operands that are n or n+1 bits long. The entire process yields a result which is smaller than or equal to N. For given A, B and odd N, there is always a Q, such that A·B + Q·N results in a number whose n LS bits are zero, or:

$$P \cdot 2^n = A \cdot B + Q \cdot N$$

This means that the result is an expression 2n bits long, whose n LS bits are zero.

Now, let $I \cdot 2^n \equiv 1$ mod N (I exists for all odd N). Multiplying both sides of the previous equation by I yields the following congruences:

from the left side of the equation:

$$P \cdot I \cdot 2^n \equiv P \text{ mod N}; \quad (\text{Remember that } I \cdot 2^n \equiv 1 \text{ mod N})$$

and from the right side:

$$A \cdot B \cdot I + Q \cdot N \cdot I \equiv AB \cdot I \text{ mod N}; \ (\text{Remember that } Q \cdot N \cdot I \equiv 0 \text{ mod N})$$

therefore:

$$P \equiv A \cdot B \cdot I \text{ mod N}.$$

This also means that a parasitic factor $I = 2^{-n}$ mod N is introduced each time a P field multiplication is performed.

The P operator is defined such that:

$$P \equiv A \cdot B \cdot I \text{ mod N} \equiv P(A \cdot B)_N.$$

and we call this "multiplication of A times B in the P field", or Montgomery Multiplication.

The retrieval from the P field can be computed by operating P on P·H, making:

$$P(P \cdot H)_N \equiv A \cdot B \text{ mod N};$$

H is typically derived by substituting P in the previous congruence:

$$P(P \cdot H)_N \equiv (A \cdot B \cdot I)(H)(I) \text{ mod N};$$

(any Montgomery multiplication operation introduces the parasitic I)

If H is congruent to the multiple inverse of $I^2$ then the congruence is valid, therefore:

$$H = I^{-2} \text{ mod N} \equiv 2^{2n} \text{ mod N}$$

(H is a function of N and is called H parameter)

In conventional Montgomery methods, to enact the P operator on A·B, the following process may be employed, using the precomputed constant J:

1) X = A·B
2) Y = (X·J) mod $2^n$ (only the n LS bits are necessary)
3) Z=X+Y·N
4) $S^{¥}$ = Z / $2^n$ (The constraint on J is that it forces Z to be divisible by $2^n$)
5) P ¥ S mod N (N is to be subtracted from S, if S $\geq$ N)

Finally, at step 5) :

$$P ¥ (A·B)_N,$$

[After the subtraction of N, if necessary:

$$P = \mathcal{P}(A·B)_N.]$$

Following the above:

$$Y = A·B·J \bmod 2^n \quad (\text{using only the n LS bits});$$

and:

$$Z = A·B + (A·B·J \bmod 2^n)·N.$$

In order that Z be divisible by $2^n$ (the n LS bits of Z are preferably zero) and the following congruence exists:

$$[A·B + (A·B·J \bmod 2^n)·N] \bmod 2^n \equiv 0$$

In order that this congruence can exist, N.J mod $2^n$ are congruent to -1 or:

$$J \equiv -N^{-1} \bmod 2^n.$$

and the constant J is the result.

J, therefore, is preferably a precomputed constant which is a function of N only. However, in a apparatus operative to output a MM result, bit by bit, provision is typically made to add in Ns at each instance where the output bit in the LS string would otherwise have been a zero, thereby obviating the necessity of precomputing J. Y is detected bit by bit using hardwired logic instead of precomputing Y = A·B J mod $2^n$. The method described is typically executable only for odd Ns.

It is to be noted that if the bit length of the MAP is equal to the bit length, n, of the modulus, only one iteration is necessary to perform a multiplication or a square. In reality the whole computation is performed in approximately n (the length of the operands) effective clock cycles. However, the last n effective clock cycles, in this embodiment, are necessary to flush the result out of the Carry Save Accumulator and also to perform the "Compare to N" which sets the borrow detect. Another preferred embodiment can be constructed wherein a parallel compare can be executed in one clock cycle, and the result left in a MAP register which can serve both as a result and an operand register.

Therefore, as is apparent, the process described employs three multiplications, one summation, and a maximum of one subtraction for the given A, B, N. Computing in the P field typically requires an additional multiplication by a constant to retrieve P(A·B)N into the natural field of modular arithmetic integers. As A can also be equal to B, this basic operator can be used as a device to square or multiply in the modular arithmetic.

Interleaved Montgomery Modular Multiplication is now described:

The previous section describes a method for modular multiplication which involved multiplications of operands that were all n bits long, and results which typically occupied 2n + 1 bits of storage space.

Using Montgomery's interleaved reduction as described previously, it is possible to perform the multiplication operations with shorter operands, registers, and hardware multipliers; enabling the implementation of an electronic device with relatively few logic gates.

First, if at each iteration of the interleave, using the device of US Patent, 5,742,530, the number of times that N is added is preferably computed, using the $J_0$ constant. To interleave, using a hardwire derivation of $Y_0$, preferably eliminates the $J_{0+}$ phase of each multiplication {2} in the following example}. Eliminating the $J_0$ phase enables integration of the functions of two separate serial/multipliers into the new single generic multiplier which preferably performs $A·B+Y_0·N+S$ at better than double speed of previous similar sized devices.

Using a k bit multiplier, it is convenient to define characters of k bit length; there are m characters in n bits; i.e., $m·k = n$.

$J_0$ is defined as the LS character of J.

Therefore:

$$J_0 \equiv -N_0^{-1} \bmod 2^k \ \ (J_0 \text{ exists as N is odd}).$$

Note, the J and $J_0$ constants are compensating numbers that when enacted on the potential output, tell how many times to add the modulus, in order to have a predefined number of least significant zeros. Following is a description of an additional advantage to the present serial device; since, as the next serial bit of output can be easily determined, it is preferred to add the modulus (always odd) to the next intermediate result. This is the case if, without this addition, the output bit, the LS serial bit exiting the CSA, is typically a "1". Adding in the modulus to the previous even intermediate result, and thereby typically outputs another LS zero into the output string. Congruency is maintained, as no matter how many times the modulus is added to the result, the remainder is constant.

In the conventional use of Montgomery's interleaved reduction, P(A·B)N is enacted in m iterations as described in steps (1) to (5):

Initially, S(0) = 0 (the ¥ value of S at the outset of the first iteration).

For i = 1, 2....m:

1) $X = S(i-1) + A_{i-1}·B$ ($A_{i-1}$ is the i-1 th character of A ; S(i-1) is the value of S at the outset of the i'th iteration.)

2) $Y_0 = X_0· J_0 \bmod 2^k$ (The LS k bits of the product of $X_0· J_0$) (The process computes the k LS bits only, e.g., the least significant 128 bits)
In the preferred implementation, this step is hidden, as in this systolic device, $Y_0$ can be anticipated bit by bit.

3) $Z=X+Y_0·N$

4) $S^¥(i) = Z/2^k$ (The k LS bits of Z are always 0, therefore Z is always divisible by $2^k$. This division is tantamount to a k bit right shift as the LS k bits of Z are all zeros; or as is seen in the circuit, the LS k bits of Z are simply disregarded.

(5) $S(i) = S^¥(i) \bmod N$ (N is to be subtracted from those S(i)'s which are larger than N ).

Finally, at the last iteration (after the subtraction of N, when necessary), $C = S^¥(m) = P(A·B)N$. To derive $F = A·B \bmod N$, the P field computation, P(C·H)N, is performed.

It is desired to know, in a preferred embodiment, that for all $S^¥(i)$'s, $S^¥(i)$ is smaller than 2N. This also means, that the last result ($S^¥(m)$) can always be reduced to a quantity less than N with, at most, one subtraction of N.

For operands which are used in the process:

$S^¥(i-1) < 2^{n+1}$ (the temporary register can be one bit longer than the B or N register- in this MAP Sd is always less than N),
$B < N <2^n$ and $A_{i-1} < 2^k$.

By definition:

$$S^{¥}(i) = Z/2^k$$

(The value of S at the end of the process, before a possible subtraction, $0<i<n$ )

For all Z output, $Z(i) < 2^{n+k+1}$; maximum output results for $N_{max} = 2^n - 1$

$$X_{max} = S^{¥}_{max} + A_i \cdot B < 2^{n+1} - 1 + (2^k-1)(2^n-2) \ [Real \ S < N]$$

$$Q_{max} = Y_0 N < (2^k-1)(2^n-1)$$

therefore:

$$Z_{max} = X_{max} + Q_{max} = 2^{n+k+1} - 2^{k+1} - 2^k + 3$$

$$S^{¥} < 2^{n+1} - 2.$$

$$S^{¥}(m)_{max} - N_{max} < (2^{n+1} - 2) - (2^n - 1) = 2^n - 1.$$

Similarly, for the lower extremum, where $N_{min} = 2^{n-1} + 1$, $S_{max} < 2 N_{min}$.

Example of a Montgomery interleaved modular multiplication:

The following computations in the hexadecimal format clarify the meaning of the interleaved method:

N = a59, (the modulus), A = 99b, (the multiplier), B = 5c3 (the multiplicand), n = 12, (the bit length of N), k = 4, (the size in bits of the multiplier and also the size of a character), and m = 3, as n = k·m.

$$J_0 = 7 \ as \ 7 \cdot 9 \equiv -1 \ mod \ 16 \ and \ H \equiv 2^{2 \cdot 12} \ mod \ a59 \equiv 44b.$$

The expected result is $F \equiv A \cdot B \ mod \ N \equiv 99b \cdot 5c3 \ mod \ a59 \equiv 375811 \ mod \ a59 = 220_{16}$.

Initially: S(0) = 0

*Step 1*   X = S(0) + $A_0 \cdot B$ = 0 + b·5c3 = 3f61
   $Y_0 = X_0 \cdot J_0 \ mod \ 2^k$ = 7 (Yo - hardwire anticipated in MAP)
   Z = X + $Y_0$·· = 3f61 + 7·a59 = 87d0
   $S(1) = Z/2^k = 87d$

*Step 2*   X = S(1) + $A_1 \cdot B$ = 87d + 9·5c3 = 3c58
   $Y_0 = X_0 \cdot J_0 \ mod \ 2^k$ = 8·7 mod $2^4$ = 8 (Hardwire anticipated)
   Z = X + $Y_0 \cdot N$ = 3c58 + 52c8 = 8f20
   $S(2) = Z / 2^k$ = 8f2

*Step 3*   X = S(2) + $A_2 \cdot B$ = 8f2 + 9.5c3 = 3ccd
   $Y_0 = d \cdot 7 \ mod \ 2^4$ = b (Hardwire anticipated)
   Z = X + $Y_0 \cdot N$ = 3ccd + b·a59 = aea0
   $S(3) = Z/2^k$ = aea,

as S(3) > N ,

$$S(m)=S(3) - N = aea - a59 = 91$$

Therefore C = P(A·B)N = $91_{16}$.

Retrieval from the P field is performed by computing P(C·H)N:

Again initially: S(0) = 0

*Step 1*  $X=S(0)+C_0 \cdot H=0+1 \cdot 44b=44b$
$Y_0 = d$ (Hardwire anticipated in new MAP)
$Z = X + Y_0 \cdot N = 44b + 8685 = 8ad0$
$S^\yen(1)=Z/2^k=8ad$ ; $S^\yen(1)=S(1)<N.$

*Step 2*  $X = S(1) + C_1 \cdot H = 8ad + 9 \cdot 44b = 2f50$
$Y_0 = 0$ (Hardwire anticipated in new MAP)
$Z = X + Y_0 \cdot N = 2f50 + 0 = 2f50$
$S^\yen(2) = Z / 2^k = 2f5$ ; $S^\yen(2) < N$

*Step 3*  $X = S(2) + C_2 \cdot H = 2f5 + 0 \cdot 44b = 2f5$
$Y_0 = 3$ (Hardwire anticipated in new MAP)
$Z = X + Y_0 \cdot N = 2f5 + 3 \cdot a59 = 2200$
$S^\yen(3) = Z / 2^k = 220_{16}$, $S^\yen(3) < N$

which is the expected value of 99b 5c3 mod a59.

If at each step k LS zeros are disregarded, the result is tantamount to having divided the n MS bits by $2^k$. Likewise, at each step, the i'th segment of the multiplier is also a number multiplied by $2^{ik}$, giving it the same rank as S(i).

The following explains a sequence of squares and multiplies, which implements a modular exponentiation.

After precomputing the Montgomery constant, H= $2^{2n}$, as this device can both square and multiply in the P field, it is possible to compute:

$$C = A^E \bmod N.$$

Let E(j) denote the j bit in the binary representation of the exponent E, starting with the MS bit whose index is 1 and concluding with the LS bit whose index is q, the process is as follows for odd exponents:

$$A^* \yen P(A \cdot H)N \quad A^* \text{ is now equal to } A \cdot 2^n.$$

$$B = A^*$$

FOR j+ 2 TO q-1

$$B \yen P(B \cdot B)N$$

IF E(j) = 1 THEN

$$B \yen P(B \cdot A^*)N$$

ENDFOR
B ¥ P(B·A)N E(0)=1; B is the last desired temporary result
multiplied by $2^n$, A is the original A.

$$C^{\yen} = B$$

$$C = C^{\yen} - N \text{ if } C^{\yen} \geq N.$$

After the last iteration, the value B is ¥ to $A^E$ mod N, and C is the final value.
To clarify, note the following example:

$$E = 1011 \longrightarrow E(1) = 1; E(2) = 0; E(3) = 1; E(4) = 1;$$

To find $A^{1011}$ mod B; q=4

$$A^* = P(A \cdot H)N = AI^{-2} I = AI^{-1} \text{ mod } N$$

$$B = A^*$$

$$\text{FOR } j = 2 \text{ to } q$$

$$B = P(B \cdot B)N \text{ which produces: } A^2(I^{-1})^2 \cdot I = A^2 \cdot I^{-1}$$

$$E(2) = 0; \quad B = A^2 \cdot I^{-1}$$

$$j = 3 \quad B = P(B \cdot B)N = A^2(I^{-1})^2 \cdot I = A^4 \cdot I^{-1}$$

$$E(3) = 1 \quad B = P(B \cdot A^*)N = (A^4 \cdot I^{-1})(AI^{-1}) \cdot I = A^5 \cdot I^{-1}$$

$$j = 4 \quad B = P(B \cdot B)N = A^{10} \cdot I^{-2} \cdot I = A^{10} \cdot I^{-1}$$

As E(4) was odd, the last multiplication is by A, to remove the parasitic $I^{-1}$.

$$B = P(B \cdot A) = A^{10} \cdot I^{-1} \cdot A \cdot I = A^{11}$$

$$C = B$$

Apparatus for accelerating the modular multiplication and exponentiation process is preferably provided, including means for precomputing the necessary single Montgomery constant, $H = 2^{2n} \bmod N$; where n is the bit length of the operand, and N is the modulus.

An exhaustive search, or a brute force attack, is an attack where the hacker knows the encryption scheme, and is able to break the scheme by trying all possible keys. In the event that the hacker is able, by physical means, to find parts of the sequence; an exhaustive search then consists of an orderly trial and error sequence of tests to determine a sequence. Exhaustive search cryptographic attacks are considered intractable if the hacker is forced to execute, on the average, at least $2^{80}$ trials in order to learn a correct sequence.

The number of trials that make a method intractable, is obviously machine dependent. Diffie' conjectures [Whitfield Diffie & Susan Landau, "Privacy on the Line", MIT Press, Cambridge, 1998 page 27, hereinafter, Diffie].states that a method of breaking a code, used by a hacker who has access to a very large percentage of the world's computing power, typically needs more than $2^{90}$ trials to be intractable for the foreseeable future. Diffie notes that to execute $2^{120}$ trials would take 30,000 years with $10^{12}$ dedicated processors each of which performs a procedural test on a secret in a picosecond. This Diffie estimates is sufficiently strong for the indefinite future. Most researchers today believe that $2^{80}$ trials pose an intractable problem. [A.J. Menezes, PC van Oorschot, S.A. Vanstone, Handbook of Applied Cryptography, CRC Press, Boca Raton, 1997, Chapter 4, 4.49]. ANSI Standard X9.31-1997 page 25 specifies $2^{100}$ iterations for banking use, which typically covers certificates from CAs [Certification Authorities].

System security in an RSA environment is dependent on the strength of the CA's secret key. These are typically long lasting, as they are preferably masked into all devices in the system. Devices with the CA's secret keys are preferably kept in a well protected environment, are not subject to reverse engineered or non-invasive attacks. However, an ordinary financial smart card, with preset reasonable credit limits and a maximum lifetime of four years typically is not be the target of a costly search and as it is typically based on a lower level of security. However, an insufficiently secured banker's certificate is a potential victim for an exhaustive search attack. A satellite television descrambler in a "pay for what you see" system that includes a potential non-paying audience of millions is a likely target for a hacker intent on cloning, as a cloned RSA smart card is typically as useful as an original card.

In an Internet disclosure, "Introduction to Differential Power Analysis and Related Attacks", by Paul Kocher, Joshua Jaffe and Benjamin Jun, Cryptography Research, San Francisco, 94102, www.cryptography.com, 1998, hereinafter, Kocher, a disclosure of methods which Kocher uses to learn cryptographic secrets in monolithic cryptocomputers of varied designs. The Kocher attacks are similar in principle but more refined in practice than previous noninvasive attacks on cryptocomputing devices. In the most refined attacks, the hacker has accurate previous knowledge of the device, the computational methods used and the hacker preferably has complete access to the software or firmware, which executes the computational method using a secret key.

In Differential Power Analysis, DPA, or any other probing method for learning cryptographic secrets, signal is referred to as the conglomerate of externally detectable features. In DPA a digitally recorded mapping over time of instantaneous current consumption transmitted by the relevant electronic components of the MAP and the host CPU while computing a cryptographic sequence traces such signal. Noise in this sense is that part of the detected data, which in any way interferes with the detection of signal. A pseudo signal is defined as an intentionally superfluously generated noise that in many or all respects mocks a valid signal using similar or identical resources. Pseudo-signals, which are effectively noise, can be generated simultaneously with a valid signal, or alone in a sequence.

As most professional rogue hackers, and most security testing laboratories typically have preliminary knowledge of the cryptocomputer and the firmware drivers, judicious designers and programmers always assume that adversaries have access to extensive resources. These adversaries have the means to reverse engineer silicon designs. These adversaries gain access to firmware, either by physically attacking the ROM or by obtaining necessary data from developers, disgruntled employees, hacking tips on an Internet bulletin boards or from another hacker who had access to an unprotected version of a cryptocomputer. Types of data that are preferably well protected are the crypto-secret keys, secret moduli, internally generated random numbers, and other secrets that are internally generated. They are preferably protected so that the programmer, the manufacturer or his employees or the cryptocomputer owner himself, do not have access to these secrets.

In most cryptographic methods, secret keys can be extricated by learning the sequence of operations performed by the cryptocomputer, and or the sequence of serial operations performed in the execution thereof.

In anticipated attacks, a plurality of devices under test simultaneously execute the same cryptographic command, on each cryptocomputer under test, and statistically learn the features of each operation in the sequence. In the simplest form, this could be an elementary timing attack to learn the sequence of squares and multiplies. In many cryptocomputers, the time to execute a squaring is approximately one half of the time necessary to execute a multiplication. A graph, as can be observed on an oscilloscope with memory, of the current consumed during a computation, is generally a sequence of disfigured bell-shapes, corresponding to the sequence of squares and multiplies. In this simplest attack, smaller bells typically represent squares and larger bells typically represent multiplications. The above described sequence of time dependent unmasked current consumption can graphically be described as a ragged skewed flat top bell, rising more quickly on the first phase of a squaring or multiplication computation, with notches of lowered consumption at phase and drastic computational changes, and finally, a fast receding decrease during the final phase of a sequence, as the CSA is being flushed out. These changes, when not carefully masked, clearly mark the status of the MAP during an iteration and can aid a hacker to synchronize onto a computational sequence.

If a hacker can learn a sequence of squares and multiplies in a secret RSA exponent, he can extricate the composite primes of the public modulus. With this knowledge a usable counterfeit cryptocomputer can be fabricated, with the extricated secret keys.

Obviously, if the chip designer has developed a procedure wherein the time and microcode sequence of squaring and multiplying are identical; a simple timing attack is typically impossible, and the adversary typically utilizes more esoteric detection techniques. As there are twice as many squaring operations as multiplications in a random sequence, this means that a combination of statistically established features, might recognize either the exponent sequence, or directly the value of the whole or part of the modulus. Learning such features, using statistical methods, entails extensive testing. A preliminary line of defense against such attacks may well be putting a lock on the number of cryptographic sequences which can be performed, before allowing acquiring an additional license, an unlock from the Certification Authority.

A preferred method for camouflaging and accelerating the squaring sequence in an exponentiation procedure is now described:

In the MAP designs of US Patents 5,742,530, 5,513,133, and the PCT patent application PCT/IL98/00148, now published, prior to each Montgomery squaring procedure, the MAP ceased computing, as the first LS k bits of the squaring multiplicand is preferably loaded into BAISR preload register. As in previous patent implementations the first serial/parallel multipliers were only 32 bits, and there were few competing designs this delay was not considered inordinately wasteful. With a 128 bit CSA, on short operands, (as are to be found in elliptic curve computations), this loading delay can account for more than 10% of procedure time in an exponentiation.

The hardware of the present invention carries out modular multiplication and exponentiation by applying Montgomery arithmetic in a novel way. Further, the squaring can be carried out in the same method, by applying it to a multiplicand and a multiplier that are equal. Modular exponentiation involves a succession of modular multiplications and squarings, and therefore is carried out by a method which comprises the repeated, suitably combined and oriented application of the aforesaid multiplication, squaring and exponentiation methods.

Final results of a Montgomery type multiplication (MM) may be larger than the modulus, but smaller than twice the modulus. In a preferred embodiment, the MAP devices can only determine the range of the result from the serial comparator, at the end of the last clock cycle of the MAP computation. In previous implementations the preload registers of the MAP were loaded in a separate k effective clock sequence, prior to the next computation, where k is the number of single bit cells in the Carry Save Accumulator (CSA), 410, which is central to the computational unit. As the drawn sizes of silicon became smaller, and factoring techniques became more sophisticated, the number of k bits in a CSA preferably becomes larger, and in a first version of this design the CSA is 128 bits long. In a less efficient and less timing wise secure procedure, the MAP does not compute whilst the first multiplicand is preloaded for a squaring operation. This preload operation in an apparatus with a 128 bit CSA causes a 128 effective clock cycle delay, and a proportionally larger loss of performance in the total process. This delay only appears naturally in the first iteration of a squaring sequence, where both the multiplicand and the multiplier are identical.

In a multiplication sequence this next original multiplicand character is preferably preloaded whilst the MAP is performing a previous squaring operation. However, if a programmer allows timing or energy differences between multiplication and squaring, the timing and energy dissipation features help a hacker learn secret square and multiplication sequences in an exponentiation procedure using non-invasive methods. It is always to be assumed that adversaries attempt to detect these and other features that indicate a process in a sequence. These differences and features are preferably eliminated or masked.

A preferred embodiment eliminates the delay caused by the wait for compare of size of the first character of the multiplicand in a squaring sequence and is achieved by preloading the first characters of the natural output of the CSA, during the end of a previous square or multiply. These characters are So which is the LS character from $Z/2^k$, and $(S - N)_0$ which is $(Z/2^k-N)_0$. These characters are serially loaded into preload buffers Y0B0SR, 350, and BAISR, 290. At the end of the previous sequence, when the range of the result is determined, the proper values are latched into the parallel multiplicand registers. It is shown in the ensuing description, how the correct multiplicands are preferably derived in a hardware implementation.

This delay state is caused by the necessity to wait until the modulus is subtracted from the whole result stream in the serial comparator/detector. Only on the last MS bit of the result does the borrow/overflow detector, 490, typically flag the control mechanism to denote whether the result is larger than the modulus. In the embodiments of US Patents 5,513,1133 and 5,742,530, only after the smallest positive congruence of the result is determined is it possible to load the first character of the squaring multiplicand. So as not to disclose the difference between a square and a multiply to an adversary who is intent on learning an exponentiation sequence using a simple timing attack, this idle period preferably also prefaces a multiplication sequence.

In a squaring operation the value in the multiplier register furnishes the values for both the multiplier and the multiplicand. If the squaring multiplier value is larger than the modulus, the modulus value is serially subtracted from the larger than modulus squaring value as the multiplier stream exits the multiplier register.

In the previous patented devices, the MAP process was halted while the first k bits were loaded after modular reduction, into the multiplicand register for the next squaring operation. As subsequent k bit multiplicand operands are modular reduced if necessary and preloaded on the fly during the squaring operation, this delay was necessitated only on the first iteration of a squaring procedure.

A primary step in masking squares and multiplication is to execute a squaring operation in a mode wherein all rotating registers and computational devices are exercised in exactly the same manner for squaring and multiplying, the only difference being the settings of data switches which choose relevant data for computation and not using [trashing] the irrelevant data.

In a preferred embodiment, the first iteration of a squaring operation, performing $B_0 \cdot B + Y_0 \cdot N$, can be accelerated and masked, when using the two outputs, $B^¥_0$ and $B^¥_0 \cdot N_0$, of the last iteration of either a squaring or multiplication operation which precedes the squaring operation which is to be masked and accelerated.

Finding the proper carry bit, c, when $c2^k + S_0^¥ = S_0 + N_0$ is loaded on the fly from the MAP is not obvious. This explicit summation is not performed in the MAP. The carry bit, c, is determined when $S^¥ \geq N$, [assume that k=128] and the summation performed is:

$$Z_l = S_0^¥ = \{ ( A_iB + Y_0N + S_- ) \bmod 2^{2k} \} \operatorname{div} 2^k$$

[$S_-$ is the temporary summation from the previous iteration.]

BRIEF DESCRIPTION OF THE DRAWINGS

In the drawings:

Fig. 1A is a block diagram of the apparatus according to an embodiment of the invention where the four main registers are depicted and the serial data flow path to the operational unit is shown and the input and output data path to the host CPU of Figure 3;

Fig. 1B is a block diagram of the operational unit, 206, of Fig. 1A;

Fig. 2A is a block diagram of the main computational part of Fig. 1B, with circled numbered sequence icons relating to the timing diagrams and flow charts of Figs. 2B, 2C, and 2D;

Fig. 2B is an event timing pointer diagram showing progressively the process leading to and including the first iteration of a squaring operation;

Fig. 2C is a detailed event sequence to eliminate "Next Montgomery Squaring" delays in the first iteration of a squaring sequence with iconed pointers relating to Fig. 2A, Fig. 2B and Fig. 2D;

Fig. 2D illustrates the timing of the computational output, relating to Fig. 2A, Fig. 2B, and Fig. 2C;

Fig. 3 is a simplified block diagram of a preferred embodiment of a complete single chip, monolithic cryptocomputer which typically exists on a smart card wherein a data disable switch typically isolates the accumulator during unloading of the MAP of Fig. 1A;

Fig. 4 is a simplified block diagram of the loader, unloader apparatus appended to a standard 8 bit CPU, wherein a bidriectional buffer controls the data flowing to and from the CPU, the volatile memory and a peripheral device according to an embodiment of this invention;

Fig. 5 is a block diagram with explicit controls for moving data into and out of a peripheral device, 282, as per Fig. 3;

Fig. 6 is a table showing that the borrow-bit from the comparator, 480, of Fig. 1B, at the 2k'th effective clock bit of the last iteration of a square or multiply operation preceding a squaring serves as the Most Significant Bit of the PLUSPR register when B¥=B+N;

Fig. 7A is a simplified block diagram of an optional add-on to a parallel non-complemented data source such as DATA_IN, 50, of Fig. 1A, operative to emit the inputted data to a valid register, and pseudo-data to a compensating register, thereby to achieve a close balance of signal and pseudo signal subsequently emitting from the two data receiving registers;

Fig. 7B is a simplified block diagram of an optional add-on to the DATA_IN, 50, register of Fig. 1A, operative to mask received signal from an uncomplemented data source, to emit balanced signal and pseudo-signal from the rotating shift register, and to emit inputted data to a valid register, via 51, and pseudo-data to a compensating register, via 52, thereby to achieve a close balance of signal and pseudo signal emitting from the two data receiving registers;

Fig. 7C is a simplified block diagram of an optional add-on to a data receiving register as of Fig. 1A, operative to mask received signal from and a semi-complemented data source, wherein alternate data bits are complemented, to emit balanced signal and pseudo-signal from the rotating shift register, and to emit the inputted data to a valid register, and pseudo-data to a compensating register, as in Fig. 7B, thereby to achieve a close balance of signal and pseudo signal emitting from the two data receiving registers; and

Fig. 7D is a timing diagram of the input, intermediate, and output signals of the add-on apparatus of Fig. 7A, showing conjectured current consumption where at each clock cycle there is a literal change in either the valid register or the compensating register.

## DETAILED DESCRIPTION OF PREFERRED EMBODIMENTS

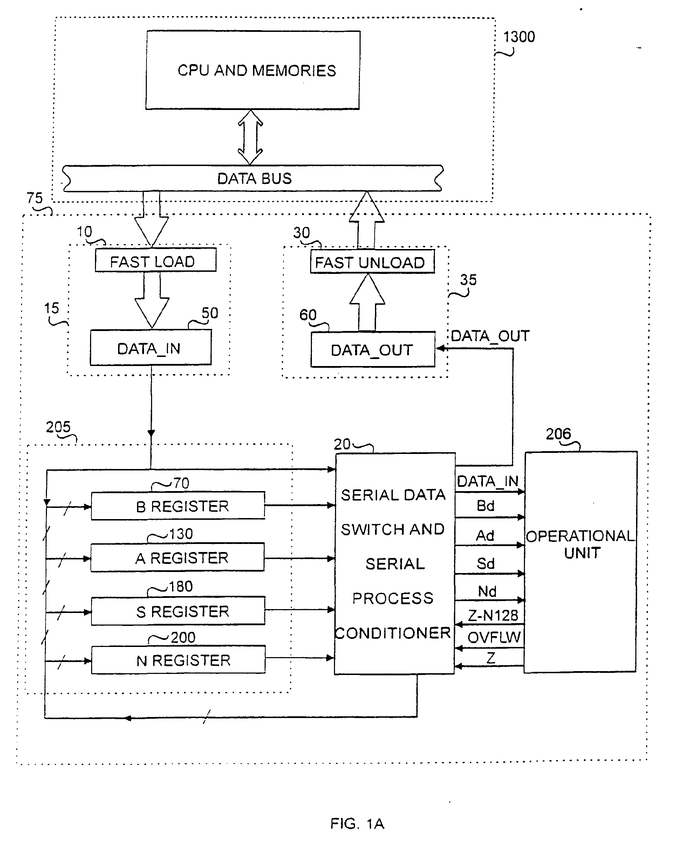

Figs. 1A - 1B, taken together, form a simplified block diagram of a serial-parallel operational unit constructed and operative in accordance with a preferred embodiment of the present invention. The apparatus of Figs. 1A - 1B, preferably include the following components:

Single Multiplexers - Controlled Switching Elements which select one signal or bit stream from a multiplicity of inputs of signals and direct it this chosen signal to a single output. Conceptually important multiplexers are 270, 280, 285, 300, 305, 400, and 420. Others are implicitly necessary for synchronizing and controls.

Multiplexers 240, 250, and 260 are respectively composed of k, k, and k+1 bit cells, 390, is an array of k+1 single multiplexers, and chooses which of the four k or k+1 inputs are to be added into the CSA, 410.

The B (70), S (180), A(130) and N (200) are the four main serial main registers in a preferred embodiment. In a preferred embodiment, these registers are fragmented in a flexible multiplexing regime, commensurate to the lengths of operands and the bit length of CSA.

Serial Adders and Serial Subtractors are logic elements that have two serial inputs and one serial output, and summate or perform subtraction on two long strings of bits.

Fast Loaders and Unloaders, 15, and 30, respectively, are devices to accelerate the data flow from the CPU controller. The method of snaring data from the data bus, and forcing values into the data bus at rates preferably at more than double the speed as is normal in simple CPU controllers, is a subject of this patent.

Data In, 50, is a parallel in serial out device, as the present specialized arithmetic logic device which is a serial fed systolic processor, and data is fed in, in parallel, and processed in serial. Methods for loading the Data_In register which typically lower the signal levels used in non-invasive current analysis are shown in Figs. 9A, 9B, and 9C.

Data Out, 60, is a serial-in/parallel-out device, for outputting results from the coprocessor to the CPU's memory. Identical methods for minimizing non-invasive current analysis as in Figs. 9A, 9B, and 9C can be used to conceal data transfer values.

Flush Signals on Bd, on Sd and on Nd are made to assure that the last k+1 bits preferably flush out the MS data from the CSA.

Preload Buffers, 350, 290; 320; and 340 are serial-in parallel-out shift registers adapted to receive four possible multiplicand combinations.

Multiplicand Latches 360; 370; and 380; are made to receive the outputs from the preload buffers, thereby allowing the load buffers, the temporal enablement to process the next phase of data before this data is preferably latched in as operands.

Y0 Sense, 430, is the logic device which determines the number of times the modulus is accumulated, in order that a k bit string of LS zeros is typically emitted at Z in Montgomery Multiplications and Squares.

The k bit delay, shift register, 470, assures that if $Z/2^k$ is larger than or equal to N, the comparison of Z/2k and N is typically made with synchronization.

The Carry Save Accumulator is almost identical to a serial/parallel multiplier, as appears in U.S. Patent, 5,513,133, excepting for the fact that three different larger than zero values can be summated, instead of the single value as usually is latched onto the input of a serial/parallel multiplier.

The overflow detect, 490, can either detect if a result is larger than or equal to the modulus, or alternately if an overflow has occurred in a natural field integer procedure.

The Serial Data Switch and Serial Process Conditioner is a logic array which switches data segments from operand registers, 70, 130, 180, 200 and synchronizes and otherwise conditions their contents including executing modular (¥) reduction.

The control mechanism is not depicted, but is preferably understood to be a set of cascaded counting devices, with switches set for systolic data flow, organized in a set of "finite state machines", FSMs.

As the standard structure of a serial/parallel multiplier is used as the basis for constructing a double acting serial parallel multiplier, a differentiation is made between the summating part of the multiplier, which is based on carry save accumulation, (as opposed to a carry look ahead adder, or a ripple adder, the first of which is considerably more complicated and the second very slow), and call it a carry save adder or accumulator, and deal separately with the preloading mechanism and the multiplexer and latches, which enable simultaneous multiplication of A times B and $Y_0$ times N, and summate both results, e.g., $A \cdot B + Y_0 \cdot D$, converting this accumulator into a powerful engine. Additional logic is added to this multiplier in order to provide for an anticipated sense operation necessary for modular reduction and serial summation necessary to provide modular arithmetic and ordinary integer arithmetic on very large numbers, e.g. 1024 bit lengths.

In a preferred embodiment, the register bank, 205, of Figure 1A is composed of a plurality of independent segments. The registers in the data bank unit in the first industrial embodiment are 128 bits long.

In a preferred embodiment, wherein composite moduli are used for secret cryptographic transformations while exponentiating over base A, in the computations of $A^d$ mod (p.q), e.g., RSA signatures, the Chinese Remainder Theorem (CRT) is employed. Typically for CRT procedures less than one half of the data segments in the data bank are utilized. These unused data segments can be exploited as random noise generators, and also as addition chain accelerators.

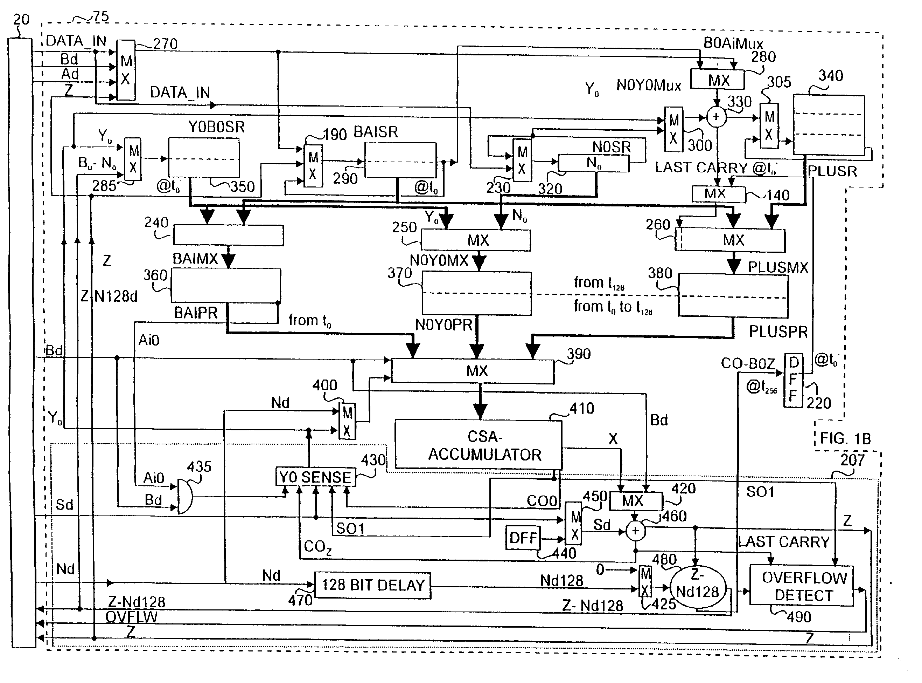

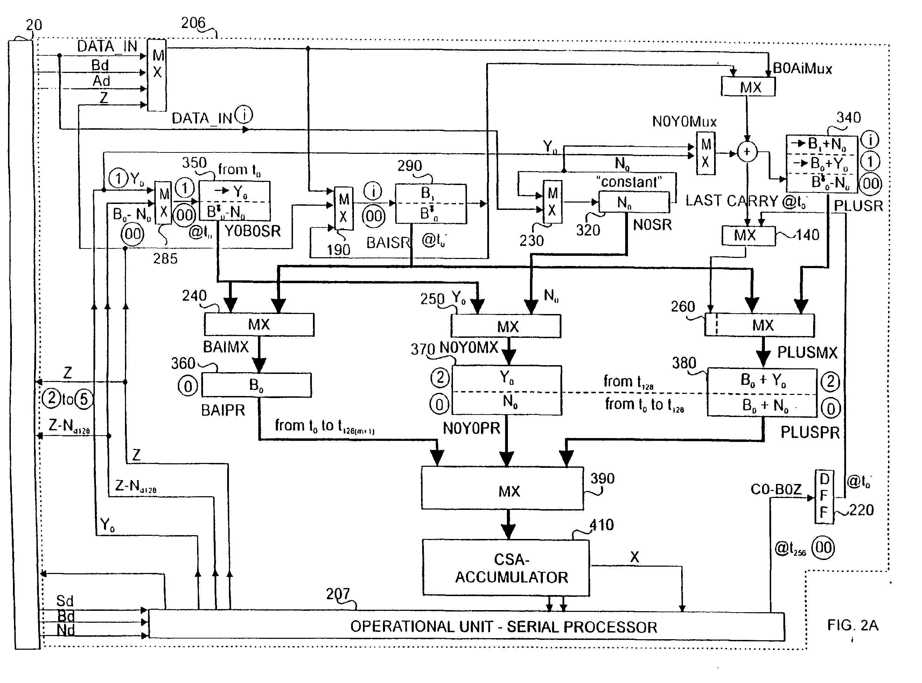

The first iteration of a squaring operation uses three variables as multiplicands, $B_0$, $N_0$, and $B_0 + N_0$. (See Figures 1B and 2A and sequence diagrams in 2B, 2C, and 2D.) As previously explained, only at the end of the previous iteration, can the MAP detect whether $B^¥$ is equal to B, or to B + N. Remembering that $N_0$ resides in the NOSR, 320, register during all modular arithmetic operations, it is understood how during this last previous iteration three new values are generated. $B^¥_0 - N_0$ is serially snared and loaded into the YOBOSR, 350, preload register, $B^¥_0$ is simultaneously loaded into the BAISR register, 290, and $B^¥_0 + N_0$, which is a serial summation of the incoming $B^¥_0$ and $N_0$ and is also serially loaded, also simultaneously, into the PLUSR, 340, register.

At the end of the previous iteration, at phase change delay time to, when the MAP can detect if $B^¥ > N$, it latches $B_0$ into the BAIPR multiplicand register, from either YOBOSR or BAISR; latches in $N_0$ from the N0SR register into the N0PR register; and latches in $B_0 + N_0$ from either the BAISR register or the PLUSR register, as is computationally obvious.

These two values, $B^¥_0$ and $B^¥_0 - N_0$ emanating during the last iteration of the earlier operation, are on-the-fly extricated, both possible values to be the multiplicand for the next squaring operation's first iteration; simultaneously summing the least significant character of the larger multiplicand value, $B^¥_0$, with the least significant character of the modulus, $N_0$, thereby to obtain a least significant portion of a largest multiplicand value which is one modulus value greater than the larger multiplicand value; and from among these three least significant characters, selecting the least significant portions of the two positive multiplicand values as $B_0$ and $B_0 + N_0$, relating to the first iteration of the next modular squaring operation.

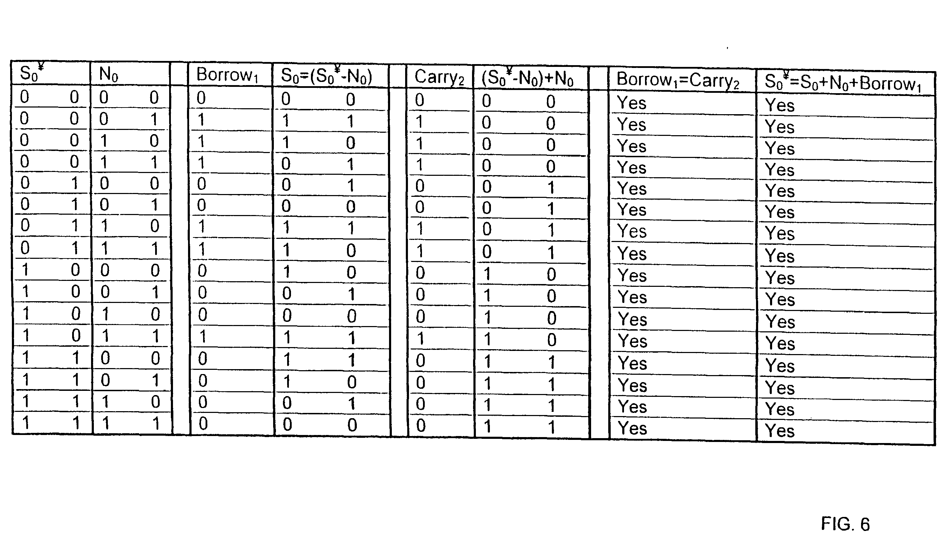

During the first k effective clock cycles of a squaring iteration, at each bit of accumulation, one of three values may be added into the accumulation stream emanating from the CSA, 410; $B_0$, the k LS bits of the multiplier; $N_0$ the k LS bits of the modulus, and the summation of the two, $B_0$ plus $N_0$, $N_0$ is now in a register reserved for itself, ready to be summated with $B_0$ into the PLUSR, 340, preload buffer, as the $B_0$ stream flows into the $B_0$ preload buffer, BAISR, 290. However, as the MAP supplies two $B_0$ streams, $B_0^¥$ (the least significant k bit character of $B^¥$ which may be larger than the modulus), and $B_0^¥ - N_0$ which emanates from the serial comparator, Z-Nd128, 480. In the event that $B^¥$ is larger than the modulus, $B_0^¥$ is equal to the k bit most significant bits of $B_0$ plus $N_0$ and has k+1 significant bits. However, as $B_0$ plus $N_0$ can be larger than k bits, it is shown in the detailed description of Fig. 6 where and how this overflow bit can be extracted.

Transferring data from memory to a memory mapped destination, especially when the CPU has no special function to provide Direct Memory Access (DMA), or when a peripheral device is designed to process data faster than the CPU can transfer to or from the external device, is a common problem. In the MAP which is designed to operate at a clock speed which is typically many times faster than the CPU's clock, failure to accelerate the normal data transfers typically causes data starvation to the MAP. Some computational procedures, which execute small operand computations, e.g., elliptic curve point multiplication over 255 bit moduli, where data is typically loaded and unloaded to at each short iteration, are particularly sensitive to low speed data transfers.

The normal sequence of memory to and from memory mapped peripheral data transfers with compact general purpose CPUs is typically a lengthy procedure. Data is first transferred from one memory site to the accumulator and in a second step the data is moved from the accumulator to another memory-mapped address.

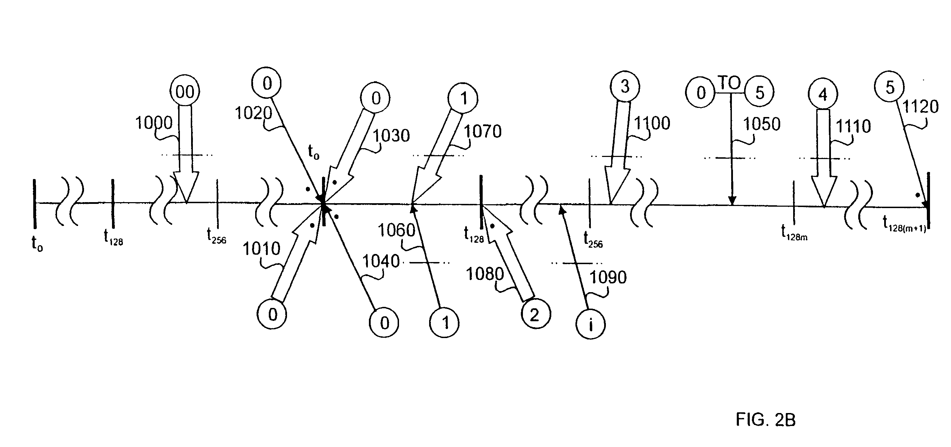

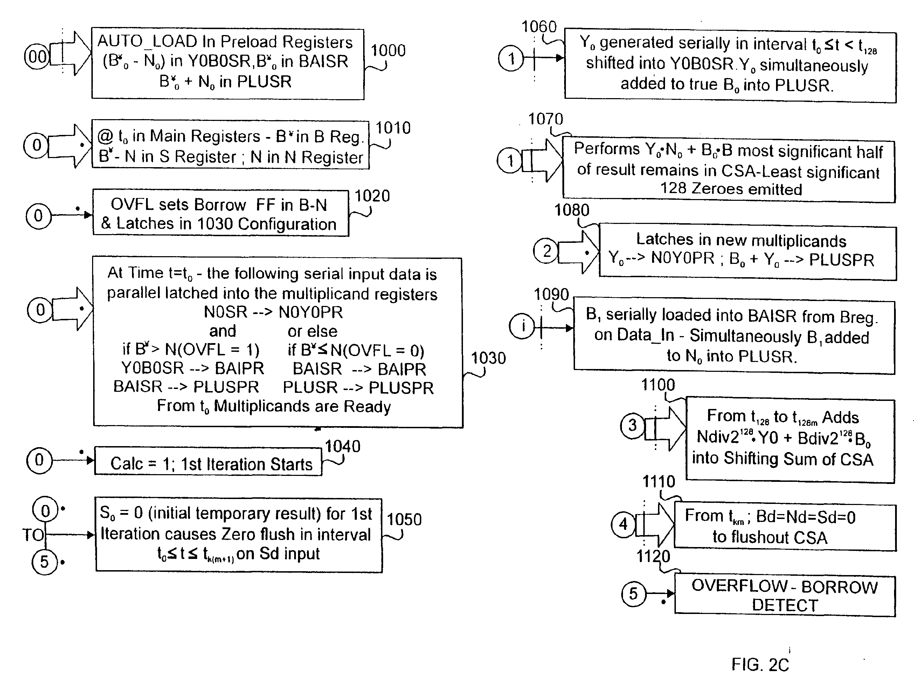

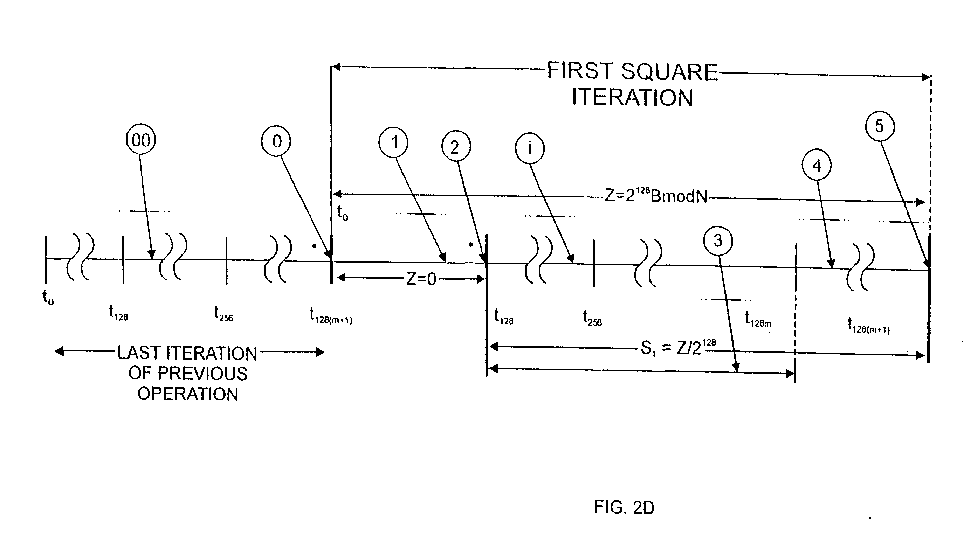

In Figs. 2A, 2B, 2C, and 2D icons are used to:

One)define "points" in time where changes of phase occur. These icons are arrows with dots near the arrow heads;
Two) define procedures that occur over multiples of k effective clock cycles with arrows crossed with broken lines;
Three) differentiate between serial procedures, e.g., $Y_0$ sensed bit by bit into the YOBOSR register, 350, with single line arrows;
Four) define mass data transfers with fat arrows, e.g., latching $N_0$ into the NOYOPR register;
Five) define time with numbered circle icons.

The workings of the MAP synchronization are described in effective clock cycles, referring to those cycles during which the unit is performing an arithmetic operation, as opposed to "real clock cycles". The "real clock cycles" typically include idle cycles while new values are latched into the multiplicand registers in the Operational Unit, or when multiplexers, flip-flops, and other device settings may be altered, in preparation for new phases of operations. See Figure 2B thick vertical lines on timing diagram, where massive data transfers are enacted.

A method for executing a Montgomery modular multiplication, wherein the multiplicand A which may be stored either in the CPU's volatile RAM or in the A register, 130, the multiplier B in the B register 70, and the modulus N in the N register, 200; comprise m characters of k bits each, the multiplicand and the multiplier preferably not being greater than the modulus, comprises the steps of:

1) loading the multiplier B into 70, and the modulus, N, into 200, and $N_0$ the LS K bit character of N into the NOSR Register, 320, there 70 and 200 are registers of n bit length, wherein n = m.k;
{ multiplying in normal field positive, natural, integers, N can be a second multiplier}
{ if n is larger than the number of [bit] cells in the B, N and S registers, the MAP is stopped at intervals, and values are typically loaded and unloaded in and out of these registers during the execution of an iteration, allowing the apparatus to be virtually capable of manipulating any length of modulus}

2) - setting the output of the register S to zero, in the Serial Process Conditioner, 210;

3) - resetting extraneous borrow and carry flags (controls, not specified in the patent);

4) executing m iterations, each iteration comprising the following operations:

$$(0 \leq i \leq m\text{-}1)$$

a) transferring the next character $A_{i-1}$ of the multiplicand A from external memory or the A register, 130, to the BAISR Load Buffer, 290.
b) simultaneously rotating the NOSR register, 320, thereby outputting $N_0$ (the LS k bits of N), while rotating the contents of the Ai Load Buffer BAISR, 290, thereby serially adding the contents of the Ai load buffer with $N_0$ into the PLUSR register, 340.

The preloading phase ends here. This phase is typically executed whilst the MAP was performing a previous multiplication or squaring. In the normal exponentiation process this phase is preferably consummated whilst the MAP is executing a previous iteration. Processes a) and b) can be executed simultaneously, wherein the $A_{i-1}$ character is loaded into its respective register, whilst the Ai stream is synchronized with the rotation of the $N_0$ register, thereby, simultaneously, the Ai stream and the $N_0$ stream are summated and loaded into the PLUSR register, 340.

A novelty of the new device is that the first character values of a squaring operation are preferably loaded before the smallest $B^{¥}$ positive congruent value of the next B is determined.

At this preload stage (first iterations of a square only) values are caught serially on the fly and one value, $B^{¥}_0$, is summated simultaneously with $N_0$ which is resident in the N0SR register, 320, and the result being deposited in the PLUSR, 340, register, and $B^{¥}_0 - N_0$ which is output directly from the comparator 480, is loaded into the YOBOSR, 350, register. At time $t_{256}$ of the last iteration of the previous square or multiply, CO_B0Z, the borrow bit from the comparator 480, is latched into the 220, D Flip-Flop, the non-trivial derivation of which was previously explained in the detailed description of Fig. 6.

Squaring a quantity from the B register, is executed in a similar manner, except that the first $B_0$ characters are preferably preloaded during the previous procedure.

Subsequent k bit $B_i$ strings are preloaded into the BAISR register, as they are fed serially into the computing section of the Operational Unit of Fig. 2A.

One) and b) described the initial preloading of values into the Operational Unit, for an iteration. If the operation is a multiplication, a character of Ai resides in the BAISR, 290, register and its summation with $N_0$ resides in the PLUSR, 340 register. If the iteration is the first iteration in a squaring operation, at the outset, the borrow-detect (OVFLW from 490), flags a next value of B to be larger or not larger than the modulus.

On the first iteration, of a square go to c'),
else for all other iterations, go to c).

c) The MAP is stopped. For all iterations, with the exception of the first iteration of a squaring, the contents of preload registers, 190, 230, and 340 are latched into multiplicand registers, 360, 370, and 380, respectively.

c') The MAP is stopped. For the first iteration of a square, there are two cases,

if $B^{\yen}$ is larger than N, the modulus -
the contents of YOBOSR, 350, ($B_0$) is latched into BAIPR
the contents of NOSR, 320, ($N_0$) is latched into N0PR
the contents of BAISR, 290, ($B_0 + N_0$) mod $2^k$ is latched into PLUSPR, with the output of D Flip Flop, 220, which is latched into the MS bit of PLUSPR, 380.
if $B^{\yen}$ is smaller or equal to N -
the contents of BAISR, 290, ($B_0$) is latched into BAIPR
the contents of NOSR, 320, ($N_0$) is latched into N0PR
the contents of PLUSR, 340, ($B_0 + N_0$) is latched into PLUSPR. Both PLUSR and PLUSPR are k+1 bit registers.

d) for the next k effective clock cycles

i) at each clock cycle the Y0 SENSE anticipates the next bit of $Y_0$ and loads this bit through multiplexer, 280, into the 350 Y0B0SR preload buffer, while shifting out the Bi (or Ai bits), thereby simultaneously loading the Y0B0SR Buffer with k bits of $Y_0$, and simultaneously summating this value with the rotating bits of Bi (or Ai), thereby loading the 340, PLUSR register with Bi (or Ai) plus $Y_0$.

ii) simultaneously multiplying $N_0$ (in N0Y0PR) by the incoming $Y_0$ bit, and multiplying Bi (or Ai) by the next incoming bit of Bd, by means of logically choosing through the multiplexer, 390, the desired value from one of the four values, zero (no operand added into CSA), or the contents of BAIPR, N0Y0PR, or PLUSR, to be added into the CSA. If neither the $Y_0$ bit nor the Bd bit is one, an all zero value is multiplexed into the CSA, if only the Nd bit is one, $N_0$ alone is multiplexed/added into the CSA, if only the Bd bit is a one, the contents of BAIPR is added into the CSA, if both the Bd bit and the Nd bit are ones, then the contents of the PLUSPR are added into the CSA.

iii) then adding to this summation; as it serially exits the Carry Save k+1 Bit Accumulator bit by bit, (the X stream); to the next relevant bit of Sd through the serial adder, 460.

These first k bits of the Z stream are zero.
In this first phase the result of $Y_0 N_0 + A_{i-1} B_0 + S_0$ has been computed, the LS k all zero bits appeared on the Zout stream, and the MS k bits of the multiplying device are saved in the CSA Carry Save Accumulator; and in the 290, 350, and 340 preload buffers reside the values $B_{i-1}$ (or $A_{i-1}$), $Y_0$ and $Y_0 + B_{i-1}$ (or $A_{i-1}$), respectively.

e) after the first k effective clock cycles, the Operating Unit is stopped again, and the preload buffers, Y0B0SR, 350, and PLUSR, 340, are latched into N0Y0PR, 370, and PLUSPR, 380, respectively (the value in BAIPR is unchanged).

The initial and continuing conditions for the next k(m-1) effective clock cycles are:
the multipliers are the bit streams from Bd, starting from the k'th bit of B and the remaining bit stream from Nd, also starting from the k'th bit of N; the CSA emits the remainder of bits of $Y_0$ times N div $2^k$ which are summated to the last (m-1)k bits of S.
Nd, delayed k clock cycles in unit 470, is subtracted by a serial subtractor from the Z stream, to sense if the result (which is to go into the B and/or S register) is larger than or equal to N.

f) for these k(m-1) effective clock cycles:

the $N_0$ Register, 210, is rotated synchronously with incoming Bi or Ai bits, loading BAISR, and PLUSR as described previously.

for these k(m-1) effective clock cycles, the remaining MS bits of N now multiply $Y_0$, the remaining MS B bits continue multiplying $B_{i-1}$ or $A_{i-1}$. If neither the N bit nor the B bit is one, an all zero value is multiplexed into the CSA. If only the Nd bit is one, $Y_0$ alone is multiplexed/added into the CSA. If only the Bd bit is a one, $B_{i-1}$ or $A_{i-1}$ is added into the CSA. If both the Bd bit and the Nd bits are ones, then $B_{i-1}$ (or $A_{i-1}$) + $Y_0$ are added into the CSA.

As simultaneously the serial output from the CSA is added to the next k(m-1) S bits through the adder, unit 460, which outputs the Z stream;

the $Z/2^k$ output stream being the first non-zero k(m-1) bits of Z.

The Z stream is switched into the S, temporary register, for the first m-1 iterations;
On the last iteration, the Z stream, which, disregarding the LS k zero bits, is the final $B^¥$ stream. This stream is directed to the B register, to be reduced by N, if necessary, as it is used in subsequent multiplications and squares;
On the last iteration, Nd delayed k clock cycles, is subtracted by a serial subtractor from the Z stream, to sense if the result, which goes into B, is larger than or equal to N.
At the end of this stage, all the bits from the N, 200, B, 70, and S, 180 registers have been fed into the operational arithmetic logic unit, Figure 1B, and the final k+1 bits of result are in the CSA, 410, ready to be flushed out.

g) the device is stopped. Sd, Bd, and Nd are set to output zero strings, to assure that in the next phase the last k+1 most significant bits are flushed out of the CSA.

If this is the last iteration, Nd, delayed k clock cycles in 470, is subtracted from the Z stream, synchronized with the significant outputs from X, to sense if the result which goes into the B register is larger than or equal to N. 480 and 490 comprise a serial comparator device, where only the last borrow and m-1'th bit are saved.

h) The device is clocked another k cycles, completely flushing out the CSA, the first k-1 bits exiting Z to the output S register, if the result is not final, and to B, if this is the last iteration in the multiplication operation.

i) The overflow sense determines, on the first m-1 iterations, if the MS output bit of S is one, and sets the serial data conditioner, 20, to modular reduce the values leaving the data register bank, if necessary.,
on the last iteration the overflow senses if B≥N, and transmits indication to the overflow flip flop on the $B^¥$-N serial subtractor.

j) is this the last iteration
NO, return to c)
YES continue to k)

k) the correct value of the result can exit from Bd, wherein if S(m) was larger than or equal to N, N is subtracted from the stream emitting from the last result.

$Y_0$ bits are anticipated in the following manner in the YOS-YOSENSE unit, 430, from five deterministic quantities:

i the LS bit of the BAIPR Multiplicand Register AND the next bit of the Bd Stream, $A_0 \cdot B_d$;
i i the LS Carry Out bit from the CSA; $CO_0$;
iii the $S_{out}$ bit from the second LS cell of the CSA; $SO_1$;
iv the next bit from the S stream, $S_d$,
v the Carry Out bit from the 460, Full Adder; $CO_z$;

These five values are XORed together to produce the next $Y_0$ bit; $Y_{0i}$:

$$Y_{0i} = A_0 \cdot B_d \oplus CO_0 \oplus SO_1 \oplus S_d \oplus CO_Z.$$

If the $Y_{0i}$ bit is a one, then another N of the same rank (multiplied by the necessary power of 2), is typically added, otherwise, N, the modulus, is typically not added.

More specifically, the figures depict several layers of logical concepts necessary for understanding the devices in totality. In all cases, the clock signal motivates the control of the circuit, and the resets revert the device to an initial state.

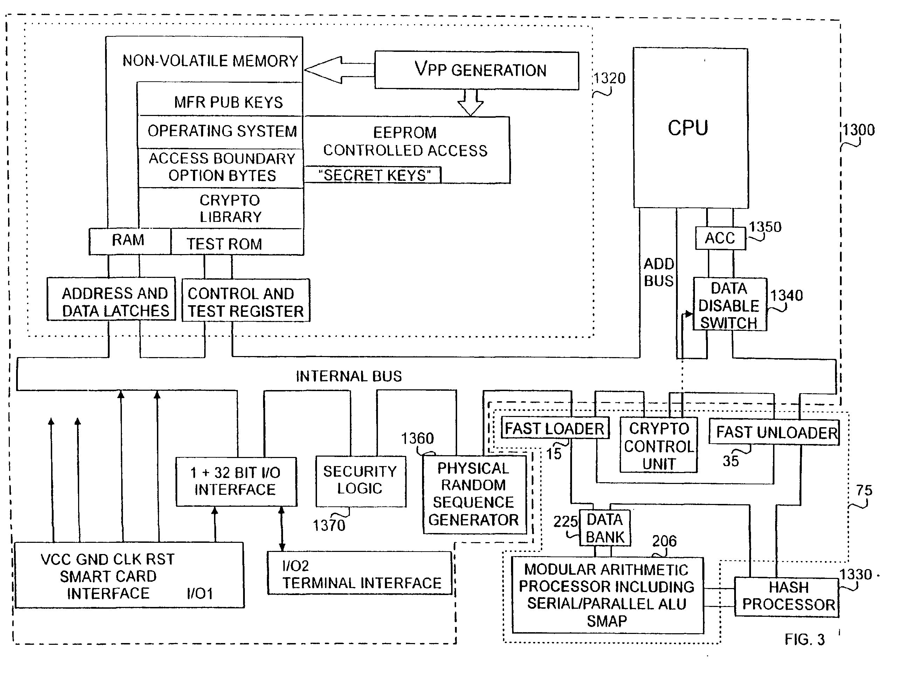

Methods for increasing memory throughput to and from peripherals and hardware configurations are illustrated in Figs. 3, 4 and 5:

Accelerated data manipulation is preferably implemented between the CPU and this or other peripheral device, for functions which are performed on operands longer than the natural register size of the peripheral device memory. Functions are typically performed at reduced processing times using the peripheral's register bank memory in conjunction with the CPU memories. In particular, a preferable novel embodiment to load and unload operands is useful for any CPU peripheral where batches of data are transferred, i.e., memory to peripheral device, and to and from peripheral device and memory. This enhancement is preferable where direct memory access, DMA, apparati are not intrinsic to the particular controller. Generally, this is disclosed in published PCT/IL98/00148, in general terms.

Three configurations are illustrated in Figs. 3, 4 and 5 of peripheral devices which receive and transmit data with single commands using standard type CPUs. In the following explanations, assume that the loader and unloader transmit data parsed in bytes to and from the data bus.

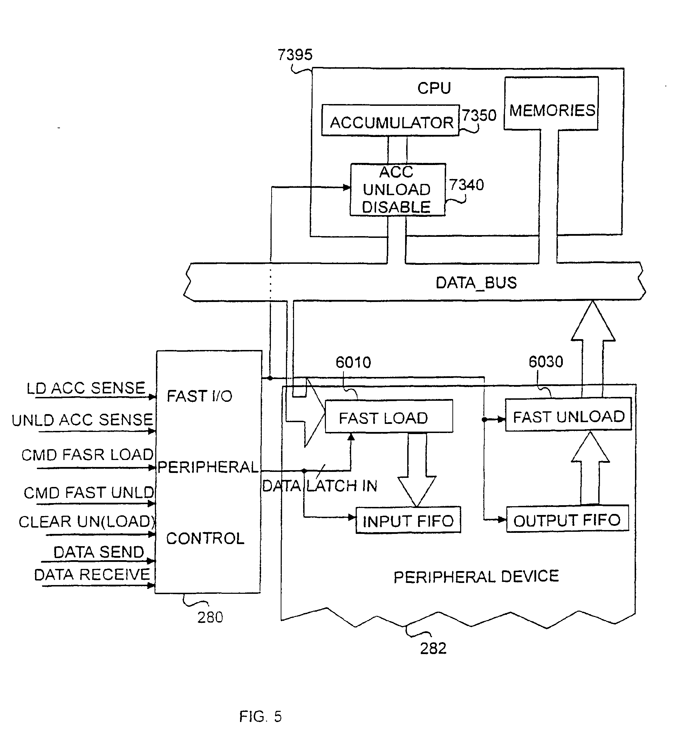

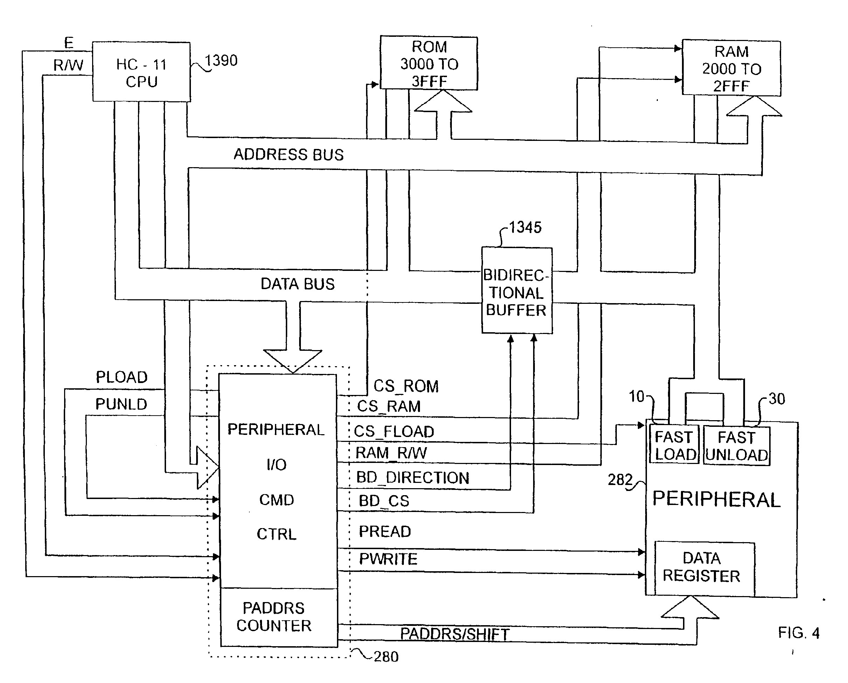

In particular, for loading a peripheral device's input mechanism, it is sufficient to flag the peripheral to latch onto any data directed to the CPU's accumulator, 1350 in Figs. 3 and 5. The logic to discontinue transfers is preferably with any CLEAR command. These processes preferably can be accelerated using double byte operand data transfer commands, such as POP from stack commands on Intel type CPU's where two bytes are transferred at each command sequence. This type of enhancement is most advantageous, as most compact CPUs do not have efficient memory to memory commands. In the most general case, data words are moved from external memory byte by byte, or word by word, with a first command of source memory to CPU accumulator and in a second command from the CPU accumulator to target memory. For most cryptographic uses on the MAP design, from three to several hundred times more data is loaded into the peripheral than is unloaded from the peripheral. The loading sequence typically requires no alterations in the core CPU, whereas the unloading sequence requires a physical disconnection of the data lines on the accumulator, 1350, typically with an "Accumulator Unload Disable", of Figs. 3 and 5, or with a "Bidirectional Buffer", 1345 of Fig. 4. The former is a preferable implementation for a monolithic cryptoprocessor, and the latter is a preferable implementation for an embodiment including a CPU with external memories and peripherals.

The method for accelerated loading of batches of data preferably involves commands that transmit from memory addresses to a memory-mapped destination. In a preferred embodiment the destination is the data loading mechanism of the MAP. The procedure consists of sending data that is desired to be loaded into the memory-mapped destination, from the memory addresses to the accumulator. As the accumulator is not read, this has no effect on the procedure. During this data batch transfer, the memory-mapped destination, e.g., the Fast Loader apparatus, 15, of the MAP, 10 of Figs. 1, 3, 4, and 5 is set to read data from the data bus, as the data is written to, but preferably is not used by the accumulator. Subsequent to a batch of such data having been snared by the memory-mapped destination, the memory-mapped destination is reset to cease reading data from the CPU bus by sending a clear command to the peripheral device.

Accelerated loading is preferably executed using a procedure that has as few as possible time consuming conditional branch loops. Each batch of data is preferably loaded or unloaded with a flat code procedure, wherein each explicit memory move is called by a separate command. This speed may be limited by a peripheral driven by a low frequency clock unable to receive data at the rate that the CPU can move data.

A pseudo-code program comprising a preferred embodiment of a method for fast loading N bytes/words of data with an 8 bit microcontroller of memory to a peripheral follows:

```
PSEUDO COMMANDS - FAST LOADING MEMORY TO PERIPHERAL [SMAP]

CTRL_REG    <——— CMD_FAST_LOAD; SETS PERIPHERAL CONTROL

            ; TO ACCEPT ALL VALID DATA

            ; FROM DATA BUS.

ACC    <——— [ADDR1]     ; ADDRESS MAY BE STACK

ACC    <——— [ADDR2]     ; WHEREIN TWO BYTES ARE

ACC    <——— [ADDR3]     ; TRANSMITTED SEQUENTIALLY

ACC    <——— [ADDR4]     ; OR ANY MEMORY MAPPED

            ; ADDRESS

ACC    <——— [ADDRi]     ; DATA IS SNARED INTO MAP'S

            ; DATA_IN

ACC    <——— [ADDRN]     ; N WORDS/BYTES LOADED.

CTRL_REG    <——— CMD_CLEAR; HALTS FAST LOAD- CEASES

            ; SNARING DATA FROM BUS
```

For many peripheral devices, unloading is the more time consuming than loading. In a computing device where there is no efficient direct memory to memory transfer logic apparatus, use of an accumulator to memory command, where the accumulator is disconnected and the peripheral transmits data directly to a memory address, is a preferable efficient embodiment. In such a case, the command to output [unload] data disconnects the DATABUS from the CPU's accumulator, 1350, whilst such data is being transferred from the peripheral device to a memory address. Such a command now directs all data from the peripheral device to the designated memory area.

A method for accelerated unloading data from a memory-mapped source, usually a peripheral port address, operative to embodiments illustrated in Figs. 3, 4 and 5 comprises:

a) sending a first command from the CPU, 1380, 1390 and 1395 of Figs. 3, 4 and 5 respectively to disable the connection to the data bus from the CPU's accumulator, 1350. Disabling is achieved in Figure 3 or Figure 5, using a disabling switch, 1340 or a bidirectional buffer, 1345, as in the implementation of Figure 4. Either configuration effectively disconnects the accumulator from the data bus whilst the peripheral is unloading;

b) simultaneously a cue is provided to the memory-mapped source to unload its data onto the data bus to be read by the memory at the specified address, e.g., of the MAP's data unloading mechanism, 35. This first command triggers the MAP to serial shift the first byte of data to the unloader, by rotating the data shift-register segment. The register is now ready to dispatch the next byte, following this initialization;

c) a series of commands to move data from accumulator to specific memory addresses is issued. At each command, data is moved from the source peripheral to the specific memory destination address, whilst 'in the case of the MAP, at each byte of data transferred, the data shift-register segment is rotated 8 bits, and until, the last byte is to be read;

d) a last byte read command is cued to the MAP peripheral. At this command the data register which unloads does not rotate, as it has already made a complete rotation. The last byte of data from the data batch is transferred. A final command is transmitted by the CPU to re-enable the accumulator's data connection to the CPU's data bus; and, preferably, simultaneously causing the memory-mapped destination to cease unloading its data onto the data bus.

A pseudo-code program for fast unloading N bytes of data from a peripheral to a sequence of addresses with an 8 bit microcontroller is as follows:

```
PSEUDO COMMANDS - FAST UNLOADING PERIPHERAL TO MEMORY

CTRL_REG     <—— CMD_FAST_UNLOAD; DISCONNECTS ACC, CONNECTS
                      ; DATA_OUT TO MEMORY MAPPED DESTINATION.
                      ; SHIFT REGISTER IS ROTATED ONE BYTE AND
                      ; DATA_OUT HAS BYTE READY TO BE READ.
[ADDR1]      <—— ACC  ; PERIPHERAL TRANSMITS
[ADDR2]      <—— ACC  ; INSTEAD OF ACCUMULATOR, 1350
[ADDR3]      <—— ACC  ; EACH TRANSFER TRIGGERS
                      ; SHIFT OF OF DATA REGISTER AND


                              OUTPUTS
                      ; BYTE TO MEMORY ADDRESS
[ADDR4]      <—— ACC  ;
                      ;
[ADDRi]      <—— ACC  ;
                      ;
CTRL_REG     <— CMD_LAST_READ ; LAST READ COMMAND
[ADDRN]      <—— ACC  ; N BYTES UNLOADED.
CTRL_REG     <—— CMD_CLEAR; HALTS FAST UNLOAD—
                      ; PERIPHERAL CEASES TRANSMISSION
```

A "data snare" which captures data on the fly for a memory mapped peripheral is depicted in Figs. 4 and 5. Such a snare is to be implemented on the new MAP smart card integrated circuit. The snare reduces this two step operation into a single step operation, or even better, if the source memory address is the stack of the CPU, where preferably, a POP command emits a double operand, sequentially, during the period when the receiving peripheral port has been set to snare data which the microcode program of the CPU dictates to be read by the accumulator. Stated differently, when the peripheral is set to receive a batch of data, it sequentially reads in all data from the data bus which is directed to the accumulator. If no other provisions are made, this means that the accumulator and the peripheral port typically receives the same data from the databus. The data in the accumulator is altered [trashed], each time a new word is transferred to it. Alternately, a compare command may be used, which exercises the CPU but does not alter the contents of the accumulator. The Data_In register preferably transfers the data to a first-in first-out, FIFO, type memory. In the implementation of Figs. 1A and 1B, the Data_In register is a byte-wide parallel-in/ serial-out register programmed to accept data from the CPU's databus. Subsequent to the transfer of a byte, the Data_In register automatically shifts the data out serially to the targeted register in the data register bank. Upon completion of a batch transfer, the "data snare" is cleared, so as not to transfer extraneous data to the Data_In register.

The logic for the carry bit on the first iteration of a squaring procedure, when $S^{¥} > N$ is now disclosed, proving the intuitive exposition of Fig. 6:

Finding this carry bit is only necessary when $S_0^{¥}$ is multiplexed from the BAISR register into the PLUSMX preload register, which only happens when $S^{¥} > N$. In such a case $S_0^{¥}$ is made to represent $So + N_0$ whose carry-out bit, c, may be a one or a zero.

To demonstrate how a change of summation procedure changes the carry bit - assume:

$$A_0=3; B_0=7; C_0=13; k=4;$$

and

$$x_1 = (( A_0 + B_0) \bmod 16 + C_0) \bmod 16 = ((10) + 13) \bmod 16 = 7$$

$$x_2 = (( A_0 + C_0) \bmod 16 + B_0) \bmod 16 = ((0) + 7) \bmod 16 = 7$$

The carry out bits $C_{x1} = 1$ and $C_{x2} = 0$ are not the same, albeit $x_1 = x_2$, as modular addition is associative.
Where $0 \leq S_0^{¥} < 2^k$; $0 < N_0 < 2^k$; and $S^{¥} > N$ - it is sufficient to prove that:
If $S_0^{¥} < N_0$; c = 1 (see step II) and if $S_0^{¥} \geq N_0$; c=0 (see step III).
To provide a proper carry out bit which appears after 2k effective clock cycles-

$$\text{I} \quad \text{where } S^{¥} > N \rightarrow S_0 + N_0 = (S_0^{¥} - N_0) + N_0.$$

$$\text{II} \quad \text{if } S_0^{¥} < N_0$$

$$\text{IIa} \quad S_0^{¥} = N_0 - e; \; ( 2^k - 1 ) > e > 1 \text{ because } (- e) \bmod 2^k = 2^k - e$$

$$\text{IIb} \quad S_0 + N_0 = (S_0^{¥} - N_0) \bmod 2^k + N_0$$

$$S_0 + N_0 = (N_0 - e - N_0) \bmod 2^k + N_0$$

$$S_0 + N_0 = - e \bmod 2^k + N_0$$

$$S_0 + N_0 = 2^k - e + S_0^{¥} + e$$

$$S_0 + N_0 = 2^k + S_0^{¥} \geq 2^k$$

$$\text{IIc} \quad c = 1 \qquad \text{as } S_0^{¥} \geq 0$$

$$\text{III} \quad \text{where } S_0^{¥} \geq N_0$$

$$\text{IIIa} \quad S_0^{\text{¥}} = N_0 + e; \qquad 2^k > e \geq 0$$

$$\text{IIIb} \quad (S_0^{\text{¥}} - N_0) \bmod 2^k + N_0 = (N_0 + e - N_0) + N_0 = N_0 + e = S_0^{\text{¥}}$$

$$\text{IIIc} \quad c = 0 \qquad \qquad \text{as } S_0^{\text{¥}} < 2^k$$

The borrow bit of $Z - N_{128d}$ @ $t_{256}$=1 if $S_0^{\text{¥}} < N_0$.

The truth table, of Fig. 6 demonstrates the types of combinations of $S_0^{\text{¥}}$ and $N_0$, offering an additional, more intuitive approach than the above formal analysis.

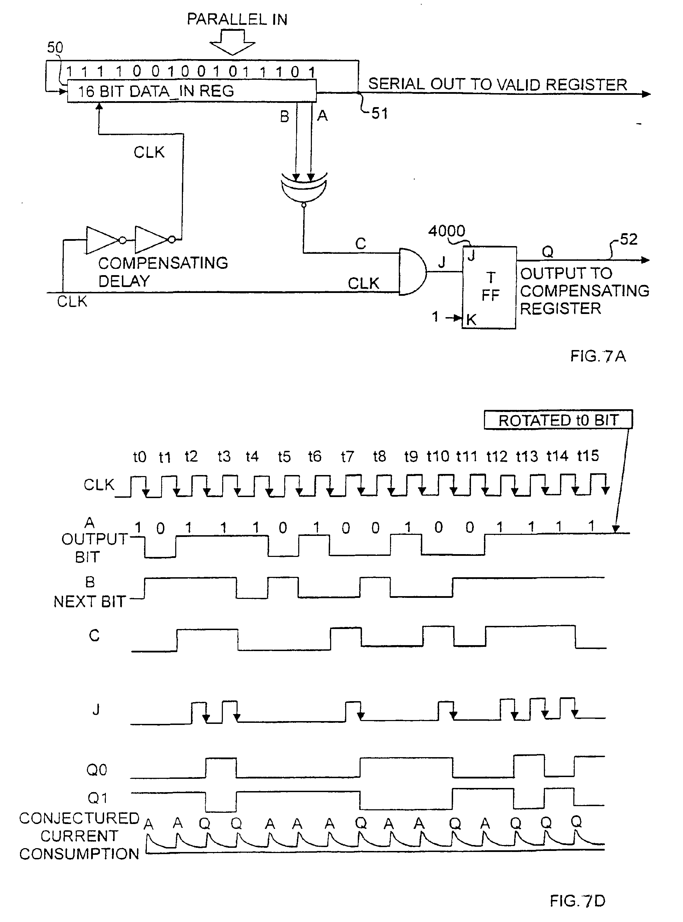

Another step for effective masking to further lower signal to noise ratio is to balance low current signals with compensating similar current dissipating pseudo-signals, in order to establish an apparent even average amplitude signal plus pseudo-signal (noise) value, as is shown in Figs. 7A-7D.

These methods can attain a very low signal to noise ratio, but the circuit continues to broadcast low level sensitive signals which can be analyzed using very fast current sensors, and statistical analysis.

An astute hacker working on an unmasked circuit can learn both data and the computational sequences during unmasked transfers of data from a memory address to the CPU Accumulator, to the DATA_IN register or conversely, from the DATA_OUT register to a memory location or to the CPU. In Parallel exchanges of data, when sensed over millions of measurements, a hacker can sense slight differences of current consumption arising from the variations of single transistors. Serial transfers of data into shift registers that also make marked changes in current consumption, caused by the number of changes of status of literals from one to zero, and zero to one of the individual cells in a register. The hacker can learn what values are transferred, assuming only minimal variations in transistors of the accumulator.

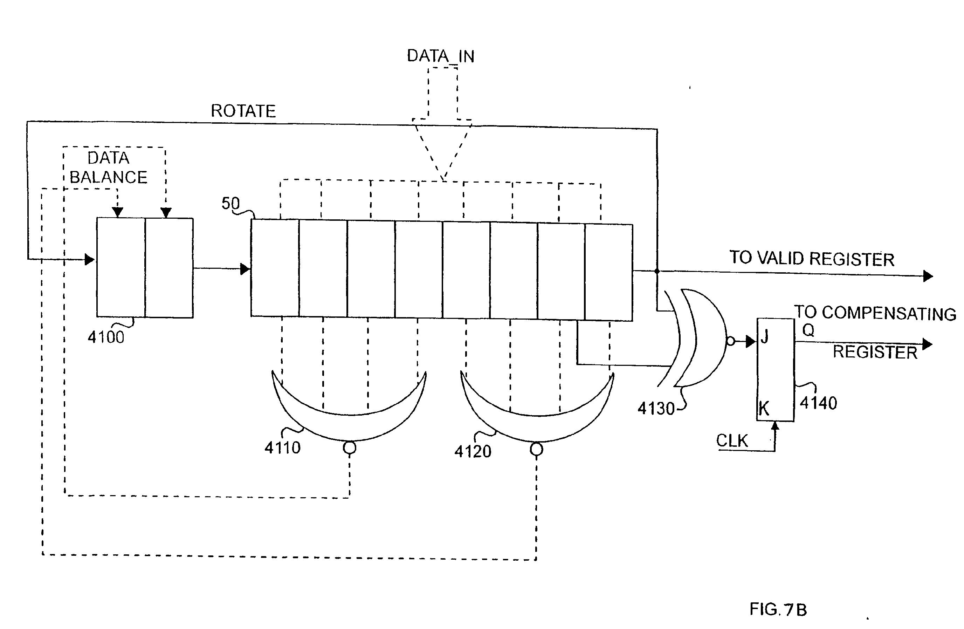

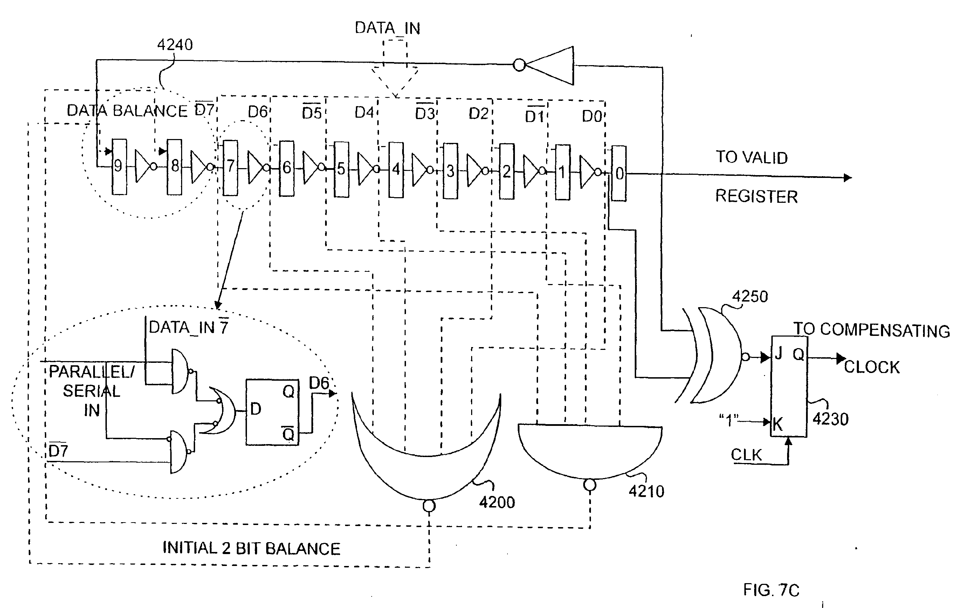

Figures 7A, 7B, and 7C depict preferred embodiments methods for masking parallel data transfers on varied buses to latches, and shift registers, and from serial outputs to shift register segments.

In Figure 7A, a preferred method for masking the data which is transmitted to a shift register segment. The goal is to cause a literal change at each clock, either on the output line to a valid register, or on the output line to an unused compensating data segment. In the architecture of the MAP, which is designed for use with the Chinese Remainder Theorem, where preferably all sensitive computations are performed using only parts of the data bank, there are unused portions of data segments which can be used as compensating registers, to transmit pseudo-signals. When signal C=1 (C=A NXOR B) signifies that there is no change on the next output, and that a change of polarity emits from T flip-flop 4000. The sum total of polarity changes of two ideal data segments loaded with such a mechanism, composed of a valid register and a compensating register, when rotated together typically closely approximate a single data register wherein all adjacent cells have reversed polarity (...0 1 0 1 0 1...). The timing diagrams of Figure 7A, demonstrate this addition of superfluous literal changes of polarity to a compensating register.

Figure 7B demonstrates a typical parallel to serial input to a serial processing device. Two 4 input NOR gates, 4110 and 4120, each output a one if the input to a nibble is all zeroes. If the nibble input is all zeroes, then a one is input into a cell in the DATA_BALANCE, 4100. Rotation of the register preferably dissipates an indistinguishably constant energy pattern. The NXOR output, 4130, of the device performs the same function as the NXOR of figure 7A, and assures literal polarity changes on sequential clocks.

Figure 7C demonstrates a parallel to serial device wherein the "odd" bits on the parallel input bus are complemented, and the even bits are uncomplemented, a common practice on internal CPU databuses. These "odd" data bits are input into the 4 input NAND gate, 4200, and the "even" bits are input into the 4 input NOR gate, 4210. 4210 outputs a zero to the DATA_BALANCE, 4240, when the complemented inputs are all ones, guaranteeing that the complemented nibble typically adds a load to the DATA_BALANCE for an all zero input. The output to the valid register is an uncomplemented string, and the output to the compensating register actuates a polarity change at clock cycles where there is no polarity change in the output to valid register.

It is appreciated that the software components of the present invention may, if desired, be implemented in ROM (read only memory) form. The software components may, generally, be implemented in hardware, if desired, using conventional techniques. It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited to what has been particularly shown and described hereinabove. Rather, the scope of the present invention is defined only by the claims that follow:

**Claims**

1. A method on a cryptocomputer performing at least one of modular exponentiation and elliptic curve point addition and point doubling, for at least partially preventing leakage of secret information as a result of a probing operation, said cryptocomputer including a first shift register (50) including a first output line (51) to a second shift register and a second output line (52) to a compensating register, the method comprising:

causing, during a data transfer from said first shift register to said second shift register, a number of changes of status from one to zero equal to the number of changes of status from zero to one by causing a binary change of value on said second output line at each clock cycle of the data transfer that the binary value on said first output line does not change.

2. A method according to claim 1, and also comprising causing the combination of said compensating register together with said second register to expend an amount of energy to complement an approximate average maximum amount of energy that said second register could potentially draw.

3. A method according to claim 1, wherein logic circuitry causes said binary change of value in said compensating register.

4. A method according to claim 2, wherein said compensating register is a shift register configured so that said second register and said shift register operate together to expend said amount of energy.

5. A method according to any of the previous claims and also comprising inserting mock square operations in an exponentiation sequence.

6. A method according to claim 5 wherein said exponentiation sequence is masked:

by causing said mock squaring operations, normal squaring operations and multiplication operations to be identical in number of clock cycles; and
by causing the amounts of energy consumed during each clock cycle of each operation to be statistically similar.

7. A method according to any of the previous claims and also comprising a multiplication procedure using addition chain procedures, wherein a plurality of single multiplication operations of a base value times a result of a previous squaring operation are replaced by single multiplications of small multiples of the base value times a result of a previous squaring operation.

8. A method according to any of the previous claims and also comprising storing precomputed values of consecutive small integer multiples of an initial point value and performing elliptic curve point additions using said multiples of an initial point value in a scalar point multiplication sequence.

9. A method according to claim 8 and wherein:

said scalar point multiplication sequence includes an addition type operation performed at regular intervals; and
said method also includes inserting a mock addition operation when an addition operation is not necessary in said sequence.

10. A method according to claim 9, wherein said addition type operation and said mock addition operation are masked to be identical in number of clock cycles and dissipate statistically similar amounts of energy during each clock cycle of each operation.

11. A method according to any of the previous claims and also comprising utilizing a rotating shift register to generate programmable modulated random noise including tapped outputs of cells in said rotating shift register, where each tap is capable of generating fixed amounts of noise.

12. A method according to claim 11 wherein;

the noise generated by each cell is conditioned by a binary data output of the cell; and
the rotating data sequence in the shift register is computed to generate a predetermined range of random noise.

13. A method according to any of the previous claims and also comprising decoupling a power supply to the cryptocomputer from an external power source and wherein the cryptocomputer operates from an intermediary independent regulator dissipating excess energy.

14. A method according to claim 13, wherein an intermediary stage of the power supply has a programmable energy dissipator.

15. A method according to claim 14, wherein the energy dissipator is designed to dissipate varying amounts of energy in different clock cycles.

**Patentansprüche**

1. Verfahren auf einem Verschlüsselungscomputer, der eine modulare Exponentiation und/oder Ellipsenkurven-Punkt-taddition und -Punktverdoppelung ausführe um wenigstens teilweise das Austreten geheimer Informationen infolge einer Probenoperation zu verhindern, wobei der Verschlüsselungscomputer ein erstes Verschieberegister (50) enthält, das über eine erste Ausgabeleitung (51) zu einem zweiten Verschieberegister und eine zweite Ausgabeleitung (52) zu einem Kompensationsregister verfügt, wobei das Verfahren umfasst:

Bewirken während eines Datentransfers vom ersten Verschieberegister zum zweiten Verschieberegister einer Anzahl von Statusänderungen von eins auf null gleich der Anzahl von Statusänderungen von null auf eins durch Bewirken einer Binärwertänderung auf der zweiten Ausgangsleitung zu jedem Taktzyklus des Datentransfers, zu dem sich der Binärwert auf der ersten Ausgangsleitung nicht ändert.

2. Verfahren nach Anspruch 1 und zudem umfassend des Bewirken der Kombination des Kompensationsregisters zusammen mit dem zweigen Register, um eine Energiemenge aufzuwenden, um eine näherungsweise, durchschnittliche, maximale Energiemenge zu ergänzen, die das zweite Register möglicherweise abziehen könnte.

3. Verfahren nach Anspruch 1, bei dem die Logikschaltung die Binärwertänderung in dem Kompensationsregister bewirkt.

4. Verfahren nach Anspruch 2, bei dem das Kompensationsregister ein Verschieberegister ist, das derart beschaffen ist, dass das zweite Register und das Verschieberegister zusammenarbeiten, um die Energiemenge aufwinden.

5. Verfahren nach einem der vorhergehenden Ansprüche und zudem umfassend das Einfügen von Simulationsquadraturoperationen in einer Exponentationsfolge.

6. Verfahren nach Anspruch 5, bei dem die Exponentationsfolge maskiert wird:

indem bewirkt wird, dass die Simulationsquadraturoperationen, normale Quadraturoperationen und Multiplikationsoperationen in der Anzahl von Taktzyklen gleich sind; und
indem bewirkt wird, dass die Energiemengen, die während jedes Taktzyklus jeder Operation verbraucht werden, statistisch ähnlich sind.

7. Verfahren nach einem der vorhergehenden Ansprüche und zudem umfassend einen Multiplikationsvorgang mit Hilfe von Additionskettenvorgängen, wobei eine Vielzahl von einzelnen Multiplikationsoperationen eines Basiswertes mal einem Ergebnis einer vorherigen Quadraturoperation durch einzelne Multiplikationen kleiner Vielfacher des Basiswertes mal einem Ergebnis einer vorherigen Quadraturoperation ersetzt werden.

8. Verfahren nach einem der vorhergehenden Ansprüche und zudem umfassend das Speichern vorberechneter Werte aufeinander folgender kleiner ganzzahliger Vielfacher eines Ausgangspunktwertes und das Ausführen von Ellipsenkurven-Punktaddionen unter Verwendung dieser Vielfachen eines Ausgangspunktwertes in einer Skalarpunktmultiplikationsfolge.

**9.** Verfahren nach Anspruch 8, bei dem:

die Skalarpunktmultiplikationsfolge eine Addionstypoperation enthält, die in regelmäßigen Intervallen ausgeführt wird;

wobei das Verfahren zudem das Einfügen einer Simulationsaddionsoperation umfasst, wenn eine Additionsoperation in dieser Folge nicht erforderlich ist.

**10.** Verfahren nach Anspruch 9, bei dem die Addionstypoperation und die Simulationsadditionsoperation maskiert werden, um in der Anzahl von Taktzyklen identisch zu sein und statistisch ähnliche Energiemengen während jedes Taktzyklus jeder Operation abzubauen.

**11.** Verfahren nach einem der vorhergehenden Ansprüche und zudem umfassend die Verwendung eines Rotationsverschieberegisters, um programmierbares moduliertes Zufallsrauschen zu erzeugen, einschließlich abgetasteten Ausgaben von Zellen in dem Rotationsverschieberegister, wobei jede Abtastung in der Lage ist, unveränderliche Rauschgrößen zu erzeugen.

**12.** Verfahren nach Anspruch 11, bei dem

das Rauschen, das von jeder Zelle erzeugt wird, durch eine Binärdatenausgabe der Zelle bedingt ist und die Rotationsdatenfolge in dem Verschieberegister berechnet wird, um einen vorbestimmten Bereich von Zufallsrauschen zu erzeugen.

**13.** Verfahren nach einem der vorhergehenden Ansprüche und zudem umfassend das Entkoppeln einer Stromversorgung zum Verschlüsselungscomputer von einer externen Stromquelle, wobei der Verschlüsselungscomputer von einer zwischengeschalteten unabhängigen Regeleinrichtung aus arbeitet, die überschüssige Energie abbaut.

**14.** Verfahren nach Anspruch 13, bei dem eine zwischengeschaltete Stufe der Stromversorgung eine programmierbare Energieabbaueinrichtung hat.

**15.** Verfahren nach Anspruch 14, bei dem die Energieabbaueinrichtung dazu eingereichtet ist, variierende Energiemengen in unterschiedlichen Taktzyklen abzubauen.

**Revendications**

**1.** Procédé sur un ordinateur de chiffrement effectuant au moins une addition de point et/ou un doublage de point de courbe elliptique et d'élévation à la puissance modulaire, pour au moins prévenir en partie une fuite d'informations secrètes à la suite d'une opération évaluation, ledit ordinateur de chiffrement comportant un premier registre à décalage (50) comprenant une première ligne de sortie (51) vers un deuxième registre à décalage et une deuxième ligne de sortie (52) vers un registre de compensation, le procédé consistant à :

faire en sorte que, durant un transfert de données dudit premier registre à décalage au dit deuxième registre à décalage, un nombre de changements d'états de 1 à 0 soit égal au nombre de changements d'états de 0 à 1 en causant un changement binaire de valeur sur ladite deuxième ligne de sortie à chaque cycle d'horloge du transfert de données de sorte que la valeur binaire sur ladite première ligne de sortie ne change pas.

**2.** Procédé selon la revendication 1 et consistant également à faire en sorte que la combinaison dudit registre de compensation avec ledit deuxième registre augmente une quantité d'énergie afin de compléter une quantité maximale moyenne approximative d'énergie que ledit deuxième registre pourrait éventuellement enlever.

**3.** Procédé selon la revendication 1, dans lequel des circuits logiques provoquent ledit changement binaire de valeur dans ledit registre de compensation.

**4.** Procédé selon la revendication 2, dans lequel ledit registre de compensation est un registre à décalage configuré de sorte que ledit deuxième registre et ledit registre à décalage fonctionnent ensemble pour augmenter la quantité d'énergie.

**5.** Procédé selon l'une quelconque des revendications précédentes et consistant également à insérer des opérations d'élévation au carré simulées dans une séquence d'élévation à la puissance.

**6.** Procédé selon la revendication 5 dans lequel ladite séquence d'élévation à la puissance est masquée :

en faisant en sorte que lesdites opérations d'élévation au carré simulées, des opérations d'élévation au carré normales et des opérations de multiplication aient le même nombre de cycles d'horloge ; et
en faisant en sorte que les quantité d'énergie consommées durant chaque cycle d'horloge de chaque opération soient statistiquement semblables,

**7.** Procédé selon l'une quelconque des revendications précédentes et comprenant également une procédure de multiplication utilisant des procédures de chaines d'additions, dans lequel une pluralité d'opérations de multiplication individuelle d'une valeur de base fois un résultat d'une précédente opération d'élévation au carré soient remplacées par des multiplications individuelles de petits multiples de la valeur de base fois un résultat d'une opération d'élévation au carré précédente.

**8.** Procédé selon quelconque des revendications précédentes et consistant également à stocker des valeurs précalculées de petits multiples entiers consécutifs d'une valeur de point initial et à effectuer des additions de points de courbe elliptique en utilisant lesdits multiples d'une valeur de point initiale dans une séquence de multiplications de points scalaires,

**9.** Procédé selon la revendication 8, dans lequel :

ladite séquence de multiplications de points scalaires comprend une opération de type addition effectuée à des intervalles réguliers, et
ledit procédé consiste également à insérer une opération d'addition simulée lorsqu'une opération d'addition n'est pas nécessaire dans ladite séquence.

**10.** Procédé selon la revendication 9, dans lequel ladite opération de type addition et ladite opération d'addition simulée sont masquées pour avoir un nombre identique de cycles d'horloge et dissiper statistiquement des quantités semblables d'énergie durant chaque cycle d'horloge de chaque opération.

**11.** Procédé selon l'une quelconque des revendications précédentes et consistant également à utiliser un registre à décalage boudé pour générer un bruit aléatoire modulé programmable comprenant des sorties dérivées de cellules dans ledit registre à décalage, chaque dérivation étant capable de générer des quantités fixes de bruit.

**12.** Procédé selon la revendication 11 dans lequel

le bruit généré par chaque cellule est conditionné par une sortie de données binaires de la cellule; et
la séquence de données bouclée dans le registre à décalage est calculée pour générer une plage prédéterminée de bruit aléatoire,

**13.** Procédé selon l'une quelconque des revendications précédentes et consistant également à découpler une alimentation électrique de l'ordinateur de chiffrement d'une source d'alimentation externe et dans lequel l'ordinateur de chiffrement fonctionne à partir d'un régulateur indépendant intermédiaire dissipant l'énergie excédentaire.

**14.** Procédé selon la revendication 13, dans lequel un étage intermédiaire de l'alimentation électrique comporte un dissipateur d'énergie programmable.

**15.** Procédé selon la revendication 14, dans lequel le dissipateur d'énergie est conçu pour dissiper des quantités variables d'énergie dans différents cycles d'horloge.

FIG. 1A

FIG. 1B

FIG. 2A

FIG. 2B

EP 1 068 565 B1

34

**1000** AUTO_LOAD In Preload Registers $(B^*_0 - N_0)$ in Y0B0SR, $B^*_0$ in BAISR $B^*_0 + N_0$ in PLUSR

**1010** @ $t_0$ in Main Registers - $B^*$ in B Reg. $B^* - N$ in S Register ; N in N Register

**1020** OVFL sets Borrow FF in B-N & Latches in 1030 Configuration

**1030** At Time $t=t_0$ - the following serial input data is parallel latched into the multiplicand registers
N0SR --> N0Y0PR
or else
if $B^* > N$(OVFL = 1) and if $B^* \leq N$(OVFL = 0)
Y0B0SR --> BAIPR    BAISR --> BAIPR
BAISR --> PLUSPR    PLUSR --> PLUSPR
From $t_0$ Multiplicands are Ready

**1040** Calc = 1; 1st Iteration Starts

**1050** $S_0 = 0$ (initial temporary result) for 1st Iteration causes Zero flush in interval $t_0 \leq t \leq t_{k(m+1)}$ on Sd input

**1060** $Y_0$ generated serially in interval $t_0 \leq t < t_{128}$ shifted into Y0B0SR. $Y_0$ simultaneously added to true $B_0$ into PLUSR.

**1070** Performs $Y_0 \cdot N_0 + B_0 \cdot B$ most significant half of result remains in CSA-Least significant 128 Zeroes emitted

**1080** Latches in new multiplicands $Y_0 --> $ N0Y0PR ; $B_0 + Y_0 --> $ PLUSPR

**1090** $B_1$ serially loaded into BAISR from Breg. on Data_In - Simultaneously $B_1$ added to $N_0$ into PLUSR.

**1100** From $t_{128}$ to $t_{128m}$ Adds Ndiv2$^{128} \cdot$ Y0 + Bdiv2$^{128} \cdot B_0$ into Shifting Sum of CSA

**1110** From $t_{km}$ ; Bd=Nd=Sd=0 to flushout CSA

**1120** OVERFLOW - BORROW DETECT

FIG. 2C

FIG. 2D

EP 1 068 565 B1

NON-VOLATILE MEMORY

VPP GENERATION 1320

MFR PUB KEYS

OPERATING SYSTEM

ACCESS BOUNDARY OPTION BYTES

EEPROM CONTROLLED ACCESS

"SECRET KEYS"

CRYPTO LIBRARY

RAM TEST ROM

CPU 1300

ACC 1350

ADD BUS

DATA DISABLE SWITCH 1340

ADDRESS AND DATA LATCHES

CONTROL AND TEST REGISTER

INTERNAL BUS

FAST LOADER 15

CRYPTO CONTROL UNIT

FAST UNLOADER 35

75

1 + 32 BIT I/O INTERFACE

SECURITY LOGIC

PHYSICAL RANDOM SEQUENCE GENERATOR 1360

1370

DATA BANK 225

206

VCC GND CLK RST SMART CARD INTERFACE     I/O1

I/O2 TERMINAL INTERFACE

MODULAR ARITHMETIC PROCESSOR INCLUDING SERIAL/PARALLEL ALU SMAP

HASH PROCESSOR 1330

FIG. 3

FIG. 5

FIG. 4

| $S_0$ | | $N_0$ | | $Borrow_1$ | $S_0=(S_0-N_0)$ | | $Carry_2$ | $(S_0-N_0)+N_0$ | | $Borrow_1=Carry_2$ | $S_0=S_0+N_0+Borrow_1$ |
|---|---|---|---|---|---|---|---|---|---|---|---|
| 0 | 0 | 0 | 0 | 0 | 0 | 0 | 0 | 0 | 0 | Yes | Yes |
| 0 | 0 | 0 | 1 | 1 | 1 | 1 | 1 | 0 | 0 | Yes | Yes |
| 0 | 0 | 1 | 0 | 1 | 1 | 0 | 1 | 0 | 0 | Yes | Yes |
| 0 | 0 | 1 | 1 | 1 | 0 | 1 | 1 | 0 | 0 | Yes | Yes |
| 0 | 1 | 0 | 0 | 0 | 0 | 1 | 0 | 0 | 1 | Yes | Yes |
| 0 | 1 | 0 | 1 | 0 | 0 | 0 | 0 | 0 | 1 | Yes | Yes |
| 0 | 1 | 1 | 0 | 1 | 1 | 1 | 1 | 0 | 1 | Yes | Yes |
| 0 | 1 | 1 | 1 | 1 | 1 | 0 | 1 | 0 | 1 | Yes | Yes |
| 1 | 0 | 0 | 0 | 0 | 1 | 0 | 0 | 1 | 0 | Yes | Yes |
| 1 | 0 | 0 | 1 | 0 | 0 | 1 | 0 | 1 | 0 | Yes | Yes |
| 1 | 0 | 1 | 0 | 0 | 0 | 0 | 0 | 1 | 0 | Yes | Yes |
| 1 | 0 | 1 | 1 | 1 | 1 | 1 | 1 | 1 | 0 | Yes | Yes |
| 1 | 1 | 0 | 0 | 0 | 1 | 1 | 0 | 1 | 1 | Yes | Yes |
| 1 | 1 | 0 | 1 | 0 | 1 | 0 | 0 | 1 | 1 | Yes | Yes |
| 1 | 1 | 1 | 0 | 0 | 0 | 1 | 0 | 1 | 1 | Yes | Yes |
| 1 | 1 | 1 | 1 | 0 | 0 | 0 | 0 | 1 | 1 | Yes | Yes |

FIG. 6

EP 1 068 565 B1

PARALLEL IN

50

```
1 1 1 1 0 0 1 0 0 1 0 1 1 1 0 1
```

16 BIT DATA_IN REG          SERIAL OUT TO VALID REGISTER

51

CLK

B | A

COMPENSATING
DELAY

CLK

C

CLK

4000

J | J

T
FF

Q

52

OUTPUT TO
COMPENSATING
REGISTER

1 → K

FIG. 7A

ROTATED t0 BIT

t0 t1 t2 t3 t4 t5 t6 t7 t8 t9 t10 t11 t12 t13 t14 t15

CLK

A
OUTPUT
BIT
1 0 1 1 1 0 1 0 0 1 0 0 1 1 1 1

B
NEXT BIT

C

J

Q0

Q1

CONJECTURED
CURRENT
CONSUMPTION
A A Q Q A A A Q A A Q A Q Q Q

FIG. 7D

FIG. 7B

FIG. 7C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4813024 A
- US 09050958 B
- US 5513133 A
- US 5742530 A
- US 050958 A
- IL 980048 W
- IL 9800148 W
- US 55131133 B
- US 5742530 B

### Non-patent literature cited in the description

- **Whitfield Diffie ; Susan Landau.** Privacy on the Line. MIT Press, 1998, 27
- **A.J. Menezes ; PC van Oorschot ; S.A. Vanstone.** Handbook of Applied Cryptography. CRC Press, 1997, 4.49
- **Paul Kocher ; Joshua Jaffe ; Benjamin Jun.** Introduction to Differential Power Analysis and Related Attacks. *Cryptography Research, San Francisco,* 1998, www.cryptography.com